# EUROPÄISCHE PATENTSCHRIFT

(11) **EP 3 433 668 B1**
(45) Veröffentlichungstag und Bekanntmachung des Hinweises auf die Patenterteilung: **22.04.2020**
(21) Anmeldenummer: 17729388.3
(22) Anmeldetag: 17.05.2017
(51) Int. Cl.: G02C 7/10, G02B 5/28, G02B 1/115, G02B 5/22

(54) **BRILLENGLAS UND VERFAHREN ZUM BERECHNEN UND HERSTELLEN EINES BRILLENGLASES**
SPECTACLE LENS AND METHOD OF CALCULATING AND PRODUCING A SPECTACLE LENS
VERRE DE LUNETTE ET PROCEDE DE CALCUL ET DE FABRICATION D'UN VERRE DE LUNETTE

(30) Priorität: 17.05.2016 EP 16169966
(43) Veröffentlichungstag der Anmeldung: 30.01.2019
(73) Patentinhaber: Carl Zeiss Vision International GmbH, 73430 Aalen (DE)
(72) Erfinder: KRAUSE, Michael, 89081 Ulm (DE); GLÖGE, Thomas, 73614 Schorndorf (DE); LAPPE, Christian, 73557 Mutlangen (DE); KRATZER, Timo, 73434 Aalen (DE); WAHL, Siegfried, 73072 Donzdorf (DE)
(74) Vertreter: Glawe, Delfs, Moll
(86) Internationale Anmeldenummer: PCT/EP2017/061833
(87) Internationale Veröffentlichungsnummer: WO 2017/198703

(56) Entgegenhaltungen:
- WO-A1-03/023497
- WO-A1-2012/076714
- PREPAS ET AL: "Light, literacy and the absence of ultraviolet radiation in the development of myopia", MEDICAL HYPOTHESES, EDEN PRESS, PENRITH, US, Bd. 70, Nr. 3, 1. Januar 2008 (2008-01-01) , Seiten 635-637, XP022449003, ISSN: 0306-9877, DOI: 10.1016/J.MEHY.2007.07.023 in der Anmeldung erwähnt
- JAN VAN DE KRAATS ET AL: "Optical density of the aging human ocular media in the visible and the UV", JOURNAL OF THE OPTICAL SOCIETY OF AMERICA A, Bd. 24, Nr. 7, 1. Juli 2007 (2007-07-01), Seiten 1842-5370, XP055314502, US ISSN: 1084-7529, DOI: 10.1364/JOSAA.24.001842
- G F Cooper ET AL: "THE YELLOW COLOUR OF THE LENS OF MAN AND OTHER PRIMATES", J. Physiol, Bd. 203 1. Januar 1969 (1969-01-01), Seiten 411-417, XP055314453, Gefunden im Internet: URL:https://www.ncbi.nlm.nih.gov/pubmed/49 78734 [gefunden am 2016-10-25]
- JUSTIN C SHERWIN ET AL: "The Association between Time Spent Outdoors and Myopia Using a Novel Biomarker of Outdoor Light Exposure", INVESTIGATIVE OPHTHALMOLOGY & VISUAL SCIENCE -, ASSOCIATION FOR RESEARCH IN VISION AND OPHTHALMOLOGY, US, Bd. 53, Nr. 8, 1. Januar 2012 (2012-01-01) , Seiten 4363-4370, XP009163297, ISSN: 0146-0404, DOI: 10.1167/IOVS.11-8677 [gefunden am 2012-06-05]
- CITEK ET AL: "Anti-reflective coatings reflect ultraviolet radiation", OPTOMETRY - JOURNAL OF THE AMERICAN OPTOMETRIC ASSOCIATION, ELSEVIER, NL, vol. 79, no. 3, 24 February 2008 (2008-02-24), pages 143-148, XP022496911, ISSN: 1529-1839, DOI: 10.1016/J.OPTM.2007.08.019

## Beschreibung

Die Erfindung betrifft ein Brillenglas nach dem Oberbegriff der Patentansprüche 1 und 2. Die Erfindung betrifft weiter ein computerimplementiertes Verfahren zum Berechnen eines Brillenglases nach dem Oberbegriff des Patentanspruchs 12, ein Verfahren zur Herstellung eines Brillenglases nach dem Oberbegriff des Patentanspruchs 14 und ein Computerprogramm zum Berechnen eines Brillenglases.

Brillengläser sind aus dem Stand der Technik in vielen Variationen bekannt. Es gibt Brillengläser ohne nominelle dioptrische Wirkung und Korrektions-Brillengläser, also Brillengläser mit dioptrischer Wirkung. Dioptrische Wirkung ist der Sammelbegriff für die fokussierende und die prismatische Wirkung eines Brillenglases.

Bei Korrektions-Brillengläsern unterscheidet man zwischen Einstärken-Brillengläsern und Multifokal-Brillengläsern. Ein Einstärken-Brillenglas ist ein Brillenglas, bei dem von der Konstruktion her nur eine dioptrische Wirkung vorhanden ist. Ein Mehrstärken-Brillenglas ist ein Brillenglas, bei dem von der Konstruktion her zwei oder mehr sichtbar verschiedene Teile mit unterschiedlichen fokussierenden Wirkungen vorhanden sind. Von Bedeutung sind insbesondere Zweistärken- oder Bifokal-Brillengläser, nämlich Mehrstärken-Brillengläser mit zwei Teilen, üblicherweise für das Sehen in die Ferne und die Nähe, sowie Gleitsicht-Brillengläser, nämlich Brillengläser mit mindestens einer Gleitsichtfläche und einer zunehmenden (positiven) Wirkung, wenn der Brillenträger nach unten blickt. Selten sind degressive Brillengläser, also solche mit mindestens einer Gleitsichtfläche und einer abnehmenden Wirkung (d. h. einer Abschwächung der Wirkung), wenn der Brillenträger nach unten blickt.

Welche Form das Brillenglas erhalten muss, um die gewünschte optische Korrektur zu erhalten, wird maßgeblich von dessen Werkstoff bestimmt. Wichtigster Parameter ist hierbei der Brechungsindex des Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Derartige Grundmaterialien für organische Brillengläser werden u.a. unter den Handelsbezeichnungen CR 39, MR 8, MR 7, CR 330 sowie MR 174 angeboten. Eine Auswahl solcher Grundmaterialien findet sich auch in der Veröffentlichungsschrift EP 2692941 A1. Laufend werden andere Werkstoffe auf deren Eignung für organische Brillengläser getestet und entwickelt. Die folgende Tabelle 1 veranschaulicht Kenngrößen sowie Bezugsgrößen einer Auswahl an bekannten Grundmaterialien:

**Tabelle 1: Grundmaterialien für die Herstellung von Brillengläsern**

| Handelsname | Grundmaterial | Mittlerer Brechungsindex nₑ | Abbe-Zahl vₑ |
|---|---|---|---|
| CR 39 | Polyallyldiglycolcarbonat | | |
| CR 330 | | | |
| CR 607 | | | |
| CR 630 | | 1.500 | 56 |
| Trivex | Polyharnstoff / Polyurethan | 1.530 | 45 |
| PC | Polycarbonat | 1.590 | 29 |
| MR 6 | Polythiourethan | 1.598 | |
| MR 8 | Polythiourethan | 1.598 | 41 |
| MR 7 | Polythiourethan | 1.664 | 32 |
| MR 10 | Polythiourethan | 1.666 | 32 |
| MR 174 | Polyepisulfid | 1.738 | 32 |
| | Mineral 1.5 | 1.525 | 58 |
| | Mineral 1.6 | 1.604 | 44 |

Derzeit werden eine große Anzahl an organischen Brillenglas-Halbfertigfabrikaten oder - Fertigfabrikaten mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in den Dokumenten DE 3007572 C2, US 6,103,148 A oder JP 2008 191186 A beschrieben ist. Dies gilt für Grundmaterialien mit den Handelsbezeichnungen MR 7, MR 8, MR 10 sowie CR 39, CR 607, CR 630 und weitere. Bei den Grundmaterialien mit den Handelsbezeichnungen MR 7, MR 8 und MR 10 handelt es ich um Polythiourethane, die von der Firma Mitsui Chemicals vertrieben werden. Die Abkürzung "MR" steht dabei für Mitsui Resin. CR 39 oder Columbia Resin 39 ist die von der Firma Pittsburgh Plate Glass Industries (PPG Industries) gewählte Marke, unter der der Werkstoff Polydiethylenglycolbisallylcarbonat bzw. Polyallyldiglycolcarbonat (Abkürzung: PADC) vertrieben wird. Hierbei handelt es sich um einen höherbrechenden duroplastischen Polymerwerkstoff. CR 607 und CR 630 stammen ebenfalls von der Firma PPG. Die Materialien CR 607 und CR 630 werden z.B. für photochrome Anwendungen eingesetzt.

Während UV-C-Strahlung mit Wellenlängen zwischen 100 nm und 280 nm nahezu vollständig von der Erdatmosphäre absorbiert wird, gelangt UV-B- Strahlung mit Wellenlängen zwischen 280 nm und 315 nm und UV-A-Strahlung mit 315 nm bis 380 nm bis zum menschlichen Auge.

Da elektromagnetische Strahlung zwischen 280 nm und 400 nm einerseits eine schädliche Wirkung für das Auge zugeschrieben wird als auch andererseits zur Degradation von Grundmaterialien insbesondere aus organischen Kunststoffen führen kann, sind nicht nur den Grundmaterialien von Brillengläsern für Sonnenbrillen sondern in der Regel auch den Grundmaterialien nicht getönter Brillengläser sogenannte UV-Absorber zugesetzt, wie dies z.B. in den Druckschriften EP 1174734 A2 oder US 8,870,374 B2 beschrieben ist. Diese UV-Absorber können den Grundmaterialien vor oder während des Abgießprozesses des Brillenglases zugesetzt werden. Es ist jedoch auch möglich, die abgegossenen und ausgehärteten Brillengläser nachträglich mit entsprechenden UV-Absorbern zu "färben". Nachfolgend werden alle diese Varianten als Grundmaterial mit UV-Absorber bezeichnet.

Die primäre Funktion der bei klaren, d.h. nicht getönten, Brillengläsern eingesetzten UV-Absorber liegt im Schutz des Grundmaterials vor Langzeit-UV-Degradation. Deshalb werden derartige UV-Absorber auch als UV-Stabilisatoren bezeichnet. Abhängig vom zu schützenden Grundmaterial, der angestrebten funktionalen Benutzungsdauer des Brillenglases und der Empfindlichkeit des Grundmaterials gegenüber UV-Degradation werden unterschiedliche UV-Stabilisatoren verwendet. UV-Stabilisatoren, wie z.B. Benzophenone, basieren auf der Verhinderung der Bildung freier Radikale durch Absorption der die Bildung freier Radikale hervorrufenden UV-Strahlung. Die Massenanteile derartiger UV-Absorber im Grundmaterial betragen im Allgemeinen zwischen 0,05 Gew% bis 2 Gew%, in manchen Anwendungen auch bis zu 5 Gew%.

Die Auswahl des geeigneten UV-Absorbers, der kompatibel mit dem Grundmaterial und den Verarbeitungsbedingungen sein muss, sowie die Optimierung der Konzentration zur Erzielung einer gewünschten UV-Absorptionseigenschaft kann z.B. mit Hilfe von Simulationsprogrammen unter Berücksichtigung geeigneter Werkstoffdatenbanken bestimmt werden. Ein derartiges Simulationsprogramm wird z.B. unter der Bezeichnung "Plastic Colour Master" von der Firma X-Rite angeboten. Details sind unter der URL http://color.xrite.com/de-de/color-measurement-quote?utm_source=google&utm_medium =cpc&utm_campaign=01-GO-DE-DE-Brand_P&utm_content=Brand&utm_term=x+rite beschrieben.

Der DE 69534779 T2 entnimmt man eine Auswahl geeigneter UV-Absorber für Brillengläser. Dort ist angegeben, dass UV-Absorber aus ein oder mehreren der Gruppe bestehend aus Benzotriazolen, Benzophenolen und Cyano-Acrylaten ausgewählt werden können. Weiter entnimmt man diesem Dokument, dass UV-Absorber insbesondere aus einer oder mehreren der folgenden Substanzen ausgewählt werden können:
- BASF Tinuvin P - [2(2'-Hydroxy-5'-Methyl-Phenyl)Benzotriazol]
- Cyanamid Cyasorb UV 531 - [2-Hydroxy-4-n-Acetoxybenzophenon]
- Cyanamid Cyasorb UV 5411 - [2-(2'-Hydroxy-5-Octylphenyl)Benzotriazol]
- 2-(2'-Hydroxy-3',6'(1,1-Dimethylbenzylphenyl)Benzotriazol
- 2-(2'-Hydroxy-3 ',5 '-di-t-Amylphenyl)Benzotriazol
- bis[2-Hydroxy-5-Methyl-3-(Benzotriazol-2-yl)Phenyl]-Methan
- bis[2-Hydroxy-5-t-Octyl-3(Benzotriazol-2-yl)Phenyl]-Methan
- Cyanamid UV 2098 - [2-Hydroxy-4-(2-Acrylocyloxy-Ethoxybenzophenon]
- National S&C Permasorb MA - [2-Hydroxy-4-(2-Hydroxy-3-Methacryloxy) Propoxybenzophenon]
- Cyanamid UV 24 - [2,2'-Dihydroxy-4-Methoxybenzophenon]
- BASF Uvinul 400 - [2,4-Dihydroxybenzophenon]
- BASF Uvinul D49 - [2,2'-Dihydroxy-4,4-Dimethoxybenzophenon]
- BASF Uvinul D50 - [2,2',4,4'-Tetrahydroxybenzophenon]
- BASF Uvinul D35 - [Ethyl-2-Cyano-3,3-Diphenylacrylat]
- BASF Uvinul N-539 - [2-Ethexyl-2-Cyano-3,3-Diphenylacrylat]
- BASF Tinuvin 213
- 2',2',4-Trihydroxybenzophenon
- BASF Uvinul M493TM und im Handel erhältliche Mischungen davon
- 2-Hydroxy-4-Acryloyloxyethoxybenzophenon (Polymer)
- 2-Hydroxy-4-Acryloyloxyethoxybenzophenon
- 4-Hydroxy-4-Methoxybenzophenon
- 2-Hydroxy-4-n-Octoxybenzophenon

Halbfertigfabrikate oder Fertigfabrikate für Brillengläser aus Polycarbonat werden im Allgemeinen in Metallformen mittels Spritzgusstechnik erzeugt. Dieses Herstellverfahren ist z.B. in der EP 0955147 A1 beschrieben.

Mineralische Brillengläser werden regelmäßig durch maschinelle mechanisch abrasive Bearbeitung eines Rohlings erzeugt.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1.

Besondere Bedeutung im Hinblick auf die vorliegende Erfindung haben Entspiegelungsbeschichtungen, die synonym auch Antireflex- oder Antireflexionsbeschichtungen genannt werden. Antireflexionsbeschichtungen werden eingesetzt, um die Reflexion von Brillengläsern zu unterdrücken und die Transmission zu erhöhen. Die Verminderung des Reflexionsgrades an der vergüteten Fläche wird durch eine destruktive Interferenz der reflektierten Strahlen erreicht. Weiter und über einen breiteren Wellenlängen- und Winkelbereich kann die Reflexion verringert werden durch den Einsatz mehrerer Schichten mit unterschiedlichem Brechungsindex. Für die optimalen Schichtdicken bei gegebener Wahl der Materialien gibt es keine einfache Formel. Diese Parameter werden daher mit Hilfe von Simulationsprogrammen bestimmt. Ein derartiges Simulationsprogramm wird z.B. von der OptiLayer GmbH in Garching, Deutschland, angeboten. Distributoren entnimmt man der URL http://www.optilayer.com/distributors.

Typische Materialien für derartige Beschichtungen sind Metalloxide, Metallfluoride, Metallnitride, diamantähnlicher Kohlenstoff oder Kombinationen davon. In Frage kommende Metalloxide sind z.B. eine oder mehrere Verbindungen der Gruppe Chromdioxid, Aluminiumoxid, Titandioxid, Indiumzinnoxid (ITO), Zirkoniumdioxid, Siliziumdioxid oder Kombinationen davon.

Die Herstellung von Antireflexionsbeschichtungen erfolgt durch Beschichtungsmethoden der Dünnschichttechnik. Zu den am häufigsten eingesetzten Verfahren gehören die physikalische Gasphasenabscheidung, wie thermisches Verdampfen und Kathodenzerstäubung. Die Wahl der Beschichtungsmethode ist hauptsächlich von dem gewünschten Schichtmaterial abhängig, beispielsweise gibt es Materialien, die für das thermische Verdampfen nicht geeignet sind. Auftragsspezifische Rezeptbrillengläser, d.h. insbesondere individualisierte Einstärken- und Mehrstärkengläser, deren optische Eigenschaften wenigstens teilweise nicht vorauswählbar standardisiert sind, sondern in Bezug auf deren Maß und/oder deren Anordnung auf dem Brillenglas auf den Benutzer angepasst individuell berechnet und gefertigt werden, und im Besonderen Gleitsicht- bzw. Progressivgläser werden durch mechanische, insbesondere deformierende und/oder abrasive, Verfahren in ihre finale Form gebracht. Hierbei können die Außenformen rund, oval oder willkürlich, sogenannte Freiformen beschreibend, ausgebildet sein. Stephen B. Prepas hat in einer Veröffentlichung in Medical Hypotheses (2008) 70, 635 bis 637 mit dem Titel "Light, literacy and the absence of ultraviolet radiation in the development of myopia", welche unter der URL http://intl.elsevierhealth.com/journals/mehy abrufbar ist, die Vermutung geäußert, dass die Abwesenheit von UV-Licht im Wellenlängenbereich zwischen 200 nm und 400 nm eine Myopie verursachendes Längenwachstum des Augapfels hervorrufen könnte. Auf einer ähnlichen Idee beruht die Patentanmeldung EP3153139A1.

Die Aufgabe der Erfindung besteht darin, ein Brillenglas, ein Verfahren zum Berechnen eines Brillenglases sowie das entsprechende Computerprogramm hierzu und ein Verfahren zum Herstellen eines Brillenglases bereitzustellen, welches der von Stephen B. Prepas geäußerten Vermutung Rechnung trägt.

Diese Aufgabe wird durch ein Brillenglas mit den Merkmalen der Patentansprüche 1 und 2, ein computerimplementiertes Verfahren zum Berechnen eines Brillenglases mit den Merkmalen des Patentanspruchs 12, ein Verfahren zur Herstellung eines Brillenglases mit den Merkmalen des Patentanspruchs 14 und ein Computerprogramm zum Berechnen eines Brillenglases mit den Merkmalen des Patentanspruchs 15 gelöst.

Vorteilhafte Ausführungen und Weiterbildungen der Erfindung sind Gegenstand der Unteransprüche.

Die Erfinder haben zur Lösung der Aufgabe intensive Literaturstudien betrieben. Sie haben festgestellt, dass die in Tabelle A.1 der DIN EN ISO 13666:2013-10 angegebene aus dem Produkt aus solarer Bestrahlungsstärke E_{S}(λ) und relativer spektraler Wirksamkeitsfunktion S(λ) resultierende spektrale Bewertungsfunktion W(λ) = E_{S}(λ) · S(λ) zur Berechnung des UV-Transmissionsgrades ein absolutes Maximum bei einer Wellenlänge λ von 310 nm und ein relatives Maximum bei einer Wellenlänge λ von 335 nm aufweist.

Die in Tabelle A.1 der DIN EN ISO 13666:2013-10 ebenfalls angegebene Blaulichtgefährdungsfunktion B(λ) hat bei einer Wellenlänge λ zwischen 435 nm und 440 nm ein absolutes und relatives Maximum. Die aus dem Produkt aus solarer Bestrahlungsstärke E_{S}(λ) und Blaulichtgefährdungsfunktion B(λ) resultierende spektrale Bewertungsfunktion W_{B}(λ) = E_{S}(λ) · B(λ) zur Berechnung des Blau-Transmissionsgrades weist ein absolutes und relatives Maximum bei einer Wellenlänge λ von 450 nm auf.

Die der Tabelle A.1 der DIN EN ISO 13666:2013-10 entnehmbare für UV-Licht relevante spektrale Bewertungsfunktion W(λ) weist für Wellenlängen λ zwischen 355 nm und 380 nm vergleichsweise kleine Werte auf. Dasselbe gilt für die für blaues Licht relevanten Blaulichtgefährdungs- und Bewertungsfunktionen B(λ) und W_{B}(λ) für Wellenlängen im Bereich zwischen 380 nm und 390 nm. Die Erfinder haben erkannt, dass der Wellenlängenbereich zwischen 355 nm und 390 nm der natürlichen Sonnenstrahlung ein vergleichsweise geringes Gefährdungspotential für das menschliche Auge aufweist. Die natürliche ultraviolette Strahlungsintensität insbesondere im Wellenlängenbereich zwischen 305 nm und 325 nm hat für das menschliche Auge jedoch eine vergleichsweise gesundheitsgefährdende Wirkung. Daraus lässt sich schließen und durch Studien belegen, dass der Wellenlängenbereich der natürlichen Sonnenstrahlung zwischen 355 nm und 390 nm für die Kontrolle des Längenwachstums des Auges insbesondere bei Heranwachsenden notwendig ist. Demnach könnte nach Auffassung der Erfinder das Voranschreiten von Fehlsichtigkeit (insbesondere Kurzsichtigkeit) verzögert werden, wenn mehr Licht dieser Wellenlängen das Auge erreichen würde.

Die meisten aktuell für die Herstellung von Brillengläsern verwendeten Materialien absorbieren Licht des Wellenlängenbereichs um 380 nm praktisch vollständig, Ausnahmen sind lediglich Mineralgläser und ein Polymer mit einem Brechungsindex von 1,50.

Die Erfinder haben festgestellt, dass klare Brillengläser aus Mineralglas welche die vorstehend angegebene erste Ausnahme bilden, aufgrund der fehlenden Gefahr der UV-Degradation grundsätzlich ohne UV-Absorber hergestellt und verkauft werden. Lediglich Sonnenbrillen aus Mineralglas weisen im Allgemeinen einen UV-Absorber im Grundmaterial auf. Der Gehalt an UV-Absorber von Sonnenbrillen ist aber so hoch, dass diese Licht des Wellenlängenbereichs zwischen 355 nm und 390 nm nahezu vollständig absorbieren.

Bei der zweiten o.a. Ausnahme handelt es sich um den Kunststoff Polydiallyldiglykolcarbonat oder (P)ADC, welches u.a. von der Firma PPG unter den Markennamen CR39, CR607, u.ä. oder von der Firma Acomon RAV700, 713, 717, u.ä. vertrieben wird. Bei diesem Grundmaterial führt der Herstellungsprozess mit einem radikalischen Initiator zwangsläufig zu einer Verschiebung des sogenannten UV cut-off in den UV-Bereich, häufig bei 350 nm. Hierbei ist entscheidend, dass der Initiator bei Start der Reaktion freie Radikale ausbildet, die die UV-Absorbermoleküle zersetzen und damit für eine weitere Verwendung untauglich machen. Sie werden entsprechend und anders als bei den anderen typischen Werkstoffen für Brillengläser gar nicht erst zugesetzt oder lediglich in sehr geringem Umfang in das Substratmaterial eingebracht. Ein UV-Schutz der über einen UV cut-off von 350 nm hinaus geht, kann erst nachträglich in das ausgehärtete Produkt eingebracht werden. Der UV cut-off ist im Rahmen der vorliegenden Erfindung als die obere Grenzwellenlänge der Sperrfilterwirkung des Brillenglases für ultraviolettes Licht definiert, bei der der Transmissionsgrad des unter einem Einfallswinkel auf eine Brillenglasfläche einfallenden, das Brillenglas transmittierenden und aus der der Brillenglaseinfallfläche gegenüberliegenden Brillenglasfläche ausfallenden Lichts 2 % beträgt. Der Transmissionsgrad T(λ) beschreibt den Anteil des einfallenden Lichtstroms, der das Brillenglas komplett durchdringt. Als Einfallswinkel eines eine optische Grenzfläche (hier: die Brillenglasfläche) durchlaufenden Lichtstrahls wird der Winkel zum Lot auf diese optische Grenzfläche bezeichnet.

Der Anteil des für die Kontrolle des Längenwachstums des Auges nützlichen Lichts, der das Auge erreichen kann, ist demnach abgesehen von den oben beschriebenen Ausnahmen, nämlich wenn das Grundmaterial des Brillenglases der Werkstoff PADC mit geringem UV-Absorberzusatz oder der Werkstoff Mineralglas ohne UV-Absorber ist, bei herkömmlichen Brillengläsern verschwindend gering. Damit führt das Tragen einer Brille zu einem kontraproduktiven Effekt, der die Abschirmung des Auges vor notwendiger Strahlung immer weiter erhöht und damit dem Längenwachstum Vorschub leistet. Darüber hinaus wird mit steigender Myopie das Brillenglas immer dicker, was die Abschirmung hilfreicher Strahlung weiter verstärkt. Die betroffenen Personen mit Myopie-Progression und damit insbesondere Kinder sind in einem Teufelskreis gefangen.

Manche Produkte bieten aufgrund ihrer speziellen Beschichtung einen sogenannten Brillenglasrückseiten-UV-Schutz (siehe z.B. Essilor Crizal UV u.a.), der den von der Rückseite des Brillenglases in das Auge des Brillenträgers reflektierten Anteil des UV-Lichts unter schrägem Lichteinfall minimiert. Diese Wirkungsweise ist z.B. auf der URL http://www.essilor.de/brillenglaser/veredelungen/Seiten/CrizalUV.aspx beschrieben. Dadurch kann das nützliche, das Voranschreiten von Fehlsichtigkeit (insbesondere Kurzsichtigkeit) verzögernde UV-Licht weder durch Transmission durch das Brillenglas von vorne noch durch Reflexion an der Rückseite des Glases das Auge des Brillenträgers erreichen.

Die grundsätzliche Idee der Erfinder besteht nunmehr darin, entweder (i) das Grundmaterial, aus dem das Brillenglas gebildet wird, mit dem UV-Absorber und/oder (ii) die Beschichtung, insbesondere eine mehrere dielektrische Schichten umfassende auf dem Prinzip der konstruktiven und destruktiven Interferenz wirkende (Antireflex-)Beschichtung, so zu gestalten oder ausgehend von herkömmlichen Brillengläsern so zu modifizieren, dass mehr nützliches, das Voranschreiten von Kurzsichtigkeit verzögerndes UV-Licht das Auge des Brillenträgers erreicht.

Zur Realisierung der ersten Variante (i) sieht die Erfindung ein Brillenglas mit folgenden Eigenschaften vor:
Das Brillenglas weist eine (bei bestimmungsgemäßem Gebrauch) objektseitige Vorderfläche und eine augenseitige Rückfläche auf. Das Brillenglas basiert auf einem Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers.

Das Grundmaterial kann jeder zur Herstellung von Brillengläsern geeignete Werkstoff sein. Insbesondere kann das Grundmaterial eines oder mehrere der vorstehend in der Beschreibungseinleitung genannten Materialien sein, nämlich insbesondere Mineralglas, Polyharnstoff, Polyacrylate, Polyurethan, Polycarbonat, Polythiourethan und Polyepisulfid. Ausgenommen ist im Rahmen der ersten Variante (i) der vorliegenden Erfindung die Verwendung von Polyallyldiglycolcarbonat als Grundmaterial, weil dieses herstellungsbedingt üblicherweise bereits die im Rahmen der Erfindung gewünschten Eigenschaften aufweist. Insbesondere in Betracht für den Einsatz als Grundmaterial kommen jedoch alle die optischen Anforderungen eines Brillenglases erfüllenden Materialien mit einem Brechungsindex von mehr als 1,50, insbesondere mit einem Brechungsindex von mehr als 1,52, weiter insbesondere mit einem Brechungsindex von mehr als 1,55, vorzugsweise mit einem Brechungsindex von mehr als 1,6.

Als UV-Absorber können alle diejenigen Materialien zum Einsatz kommen, welche kompatibel mit dem Grundmaterial und den Verarbeitungsbedingungen sind und welche die nachfolgend beschriebenen gewünschten UV-Absorptionseigenschaften aufweisen. Insbesondere ist es auch möglich, dass das Grundmaterial nicht nur mit einem einzigen UV-Absorbermaterial versetzt ist, sondern dass der UV-Absorber mehrere unterschiedliche ultraviolettes Licht absorbierende chemische Verbindungen umfasst. Grundsätzlich kommen als UV-Absorbermaterialien chemische Verbindungen aus der Gruppe der Benzotriazole, Benzophenole, Benzophenone und Cyano-Acrylate in Betracht. Es sind z.B. folgende Verbindungen und Mischungen davon als UV-Absorber geeignet: 2(2'-Hydroxy-5'-Methyl-Phenyl)Benzotriazol, 2-Hydroxy-4-n-Acetoxybenzophenon, 2-(2'-Hydroxy-5-5-Octylphenyl)Benzotriazol, 2-(2'-Hydroxy-3',6'-(1,1-Dimethylbenzylphenyl)Benzotriazol, 2(2'-Hydroxy-3',5'-di-t-Amylphenyl)Benzotriazol, bis[2-Hydroxy-5-Methyl-3-(Benzotriazol-2-yl)Phenyl]-Methan, bis[2-Hydroxy-5-t-Octyl-3-(Benzotriazol-2-yl)Phenyl]Methan, 2-Hydroxy-4-(2-Acrylocyloxy-Ethoxybenzophenon), 2-Hydroxy-4-(2-Hydroxy-3-Methacryloxy) Propoxybenzophenon, 2,2'-Dihydroxy-4-Methoxybenzophenon, 2,4-Dihydroxybenzophenon, 2,2'-Dihydroxy-4,4-Dimethoxybenzophenon, 2,2',4,4'-Tetrahydroxybenzophenon, Ethyl-2-Cyano-3,3 Diphenylacrylat, 2-Ethexyl-2-Cyano-3,3-Diphenylacrylat, 2',2',4-Trihydroxybenzophenon, 2-Hydroxy-4-Acryloyloxyethoxybenzophenon, 2-Hydroxy-4-Acryloyloxyethoxybenzophenon, 4-Hydroxy-4-Methoxybenzophenon und 2-Hydroxy-4-n-Octoxybenzophenon.

Nach der Erfindung ist der Massenanteil des UV-Absorbers im Grundmaterial so groß, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° in einem Wellenlängenbereich zwischen 325 nm und 360 nm liegt. Anders ausgedrückt beträgt der durch einen Transmissionsgrad von 2 % definierte UV cut-off für auf die Vorderfläche des erfindungsgemäßen Brillenglases einfallendes Licht für jeden Einfallswinkel zwischen 0° und 15° im Wellenlängenintervall zwischen 325 nm und 360 nm. Im Wellenlängenbereich zwischen 280 nm und dem UV cut-off liegt der Transmissionsgrad des auf die Vorderfläche einfallenden ultravioletten Lichts demnach stets unterhalb von 2 %. Bei der UV cut-off-Wellenlänge beträgt der Transmissionsgrad gerade 2 %.

Aus der Erkenntnis der Erfinder, wonach Licht im Wellenlängenbereich zwischen 355 nm und 390 nm für die Kontrolle des Längenwachstums des Auges nützlich ist und des weiteren insbesondere Licht im Wellenlängenbereich zwischen 305 nm und 325 nm eine das Auge schädigende Wirkung zugeschrieben wird, ist es weiter vorteilhaft, wenn der UV cut-off entsprechend der vorstehenden Definition zwischen 325 nm und 350 nm, und wegen des weiteren lokalen Gefährdungsmaximums der spektralen Bewertungsfunktion W(λ) bei Wellenlängen im Bereich zwischen 335 nm und 360 nm, weiter bevorzugt zwischen 340 nm und 360 nm oder gar zwischen 340 nm und 350 nm liegt.

Aus der Erkenntnis der Erfinder, wonach Licht im Wellenlängenbereich zwischen 355 nm und 390 nm für die Kontrolle des Längenwachstums des Auges nützlich ist, ergibt sich die weitere erfindungsgemäße Anforderung an das Brillenglas, dass der Transmissionsgrad für unter einem Einfallswinkel auf die Vorderfläche einfallendes, das Brillenglas transmittierendes und aus der Rückfläche ausfallendes Licht der Wellenlänge 380 nm für jeden Einfallswinkel zwischen 0° und 15° zwischen 25 % und 80 % beträgt. Ein Kompromiss hinsichtlich hinreichender Kontrolle des Längenwachstums und Reduzierung des aus der spektralen Bewertungsfunktion W(λ) ableitbaren Augenschädigungspotentials stellt ein Transmissionsgrad zwischen 35 % und 70 %, bevorzugt zwischen 40 % und 60 % für unter einem Einfallswinkel auf die Vorderfläche einfallendes, das Brillenglas transmittierendes und aus der Rückfläche ausfallendes Licht der Wellenlänge 380 nm für jeden Einfallswinkel zwischen 0° und 15° dar.

Ein Beispiel nach der ersten Variante (i) erfordert nicht, dass das Brillenglas eine Beschichtung aufweist. Es ist jedoch günstig, wenn das Brillenglas eine Beschichtung, vorzugsweise eine vorderflächen- und rückflächenseitig an- oder aufgebrachte Beschichtung, mit einer insbesondere im "nützlichen Spektralbereich" antireflektierenden Wirkung aufweist. Die Beschichtung kann eine Mehrzahl von Schichten unterschiedlicher Dicke umfassen. Die Beschichtung kann eine vorderseitige Teilbeschichtung und eine rückseitige Teilbeschichtung umfassen, welche wiederum jeweils aus einem Schichtabfolge mehrerer oder einer Vielzahl an Einzelschichten bestehen können.

Die eingangs gestellte Aufgabe wird durch das in Anspruch 1 angegebene und vorstehend beschriebene Brillenglas nach der ersten Variante (i) der der Erfindung zugrunde liegenden Idee vollumfänglich gelöst.

Zur Realisierung der zweiten Variante (ii) sieht die Erfindung ein Brillenglas mit folgenden Eigenschaften vor:
Das Brillenglas weist in Übereinstimmung mit dem Brillenglas nach der Idee der ersten Variante (i) eine (bei bestimmungsgemäßem Gebrauch) objektseitige Vorderfläche und eine (bei bestimmungsgemäßem Gebrauch) augenseitige Rückfläche auf. Das Brillenglas basiert auf einem Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers.

Das Grundmaterial kann wie beim Brillenglas zur Realisierung der ersten Variante (i) jedes zur Herstellung von Brillengläsern geeignete Material sein. Insbesondere kann das Grundmaterial eines oder mehrere der folgenden Materialien sein: Mineralglas, Polyallyldiglycolcarbonat, Polyharnstoff, Polyacrylate, Polyurethan, Polycarbonat, Polythiourethan, Polyepisulfid. Ausgenommen ist im Rahmen der Idee nach der zweiten Erfindungsvariante (ii) jedoch nicht die Verwendung von Polyallyldiglycolcarbonat als Grundmaterial. Insbesondere in Betracht für den Einsatz als Grundmaterial kommen alle die optischen Anforderungen eines Brillenglases erfüllenden Materialien mit einem Brechungsindex von mehr als 1,45, insbesondere von mehr als 1,50, vorzugsweise mit einem Brechungsindex von mehr als 1,55, weiter vorzugsweise mit einem Brechungsindex von mehr als 1,6.

Als UV-Absorber können alle oben im Zusammenhang mit Variante (i) angegebenen Materialien zum Einsatz kommen, welche kompatibel mit dem Grundmaterial und den Verarbeitungsbedingungen sind und welche die nachfolgend beschriebenen gewünschten UV-Absorptionseigenschaften aufweisen. Insbesondere ist es auch bei dieser Variante (ii) möglich, dass das Grundmaterial nicht nur mit einem einzigen UV-Absorbermaterial versetzt ist, sondern zwei oder mehrere chemische Verbindungen umfasst. Grundsätzlich kommen als UV-Absorbermaterialien chemische Verbindungen aus der Gruppe der Benzotriazole, Benzophenole, Benzophenone und Cyano-Acrylate in Betracht. Exemplarisch wird wiederum auf die folgenden Verbindungen und Mischungen davon hingewiesen: 2-(2'-Hydroxy-5'-Methyl-Phenyl)Benzotriazol, 2-Hydroxy-4-n-Acetoxybenzophenon, 2-(2'-Hydroxy-5-5-Octylphenyl)Benzotriazol, 2-(2'-Hydroxy-3',6'-(1,1-Dimethylbenzylphenyl)Benzotriazol, 2(2'-Hydroxy-3',5'-di-t-Amylphenyl)Benzotriazol, bis[2-Hydroxy-5-Methyl-3-(Benzotriazol-2-yl)Phenyl]-Methan, bis[2-Hydroxy-5-t-Octyl-3-(Benzotriazol-2-yl)Phenyl]Methan, 2-Hydroxy-4-(2-Acrylocyloxy-Ethoxybenzophenon), 2-Hydroxy-4-(2-Hydroxy-3-Methacryloxy) Propoxybenzophenon, 2,2'-Dihydroxy-4-Methoxybenzophenon, 2,4-Dihydroxybenzophenon, 2,2'-Dihydroxy-4,4-Dimethoxybenzophenon, 2,2',4,4'-Tetrahydroxybenzophenon, Ethyl-2-Cyano-3,3 Diphenylacrylat, 2-Ethexyl-2-Cyano-3,3-Diphenylacrylat, 2',2',4-Trihydroxybenzophenon, 2-Hydroxy-4-Acryloyloxyethoxybenzophenon, 2-Hydroxy-4-Acryloyloxyethoxybenzophenon, 4-Hydroxy-4-Methoxybenzophenon und 2-Hydroxy-4-n-Octoxybenzophenon..

Die Idee nach der zweiten Variante (ii), nämlich eine Beschichtung, insbesondere eine mehrere dielektrische Schichten umfassende auf dem Prinzip der konstruktiven und destruktiven Interferenz wirkende (Antireflex-)Beschichtung des Brillenglases, vorzusehen und diese so zu modifizieren bzw. zu gestalten, dass mehr nützliches, das Voranschreiten von Kurzsichtigkeit verzögerndes UV-Licht das Auge des Brillenträgers erreicht, erfordert nicht, dass Licht des "nützlichen Spektralbereichs" das Brillenglas transmittieren kann. Die Idee nach der zweiten Variante (ii) betrifft demnach auch und vor allem Brillengläser, deren Grundmaterial selbst von Hause aus im für die Erfindung maßgeblichen "nützlichen Spektralbereich zwischen 355 nm und 390 nm" intransparent oder nur schwach transparent ist oder deren Grundmaterial einen UV-Absorber umfasst, welcher verhindert dass das Brillenglas für Licht im für die Erfindung maßgeblichen "nützlichen Spektralbereich zwischen 355 nm und 390 nm" durchlässig oder zumindest in "hinreichend nützlichem Umfang" durchlässig ist.

Die Beschichtung eines Brillenglases, welches die Idee nach der zweiten Variante (ii) verwirklicht, hat einen Reflexionsgrad, der für unter einem Einfallswinkel auf die Rückfläche einfallendes Licht der Wellenlänge 380 nm für jeden Einfallswinkel zwischen 30° und 45° größer als 8 % ist. Der Reflexionsgrad R(λ), welcher in der Literatur auch Reflexionsvermögen, Reflektivität oder Reflektanz genannt wird, ist definiert als das Verhältnis zwischen reflektiertem und (auf eine der einander gegenüber liegenden Brillenglasflächen) einfallendem Lichtstrom. Je weniger Licht des nützlichen Spektralbereichs zwischen 355 nm und 390 nm, das auf die Vorderseite des Brillenglases trifft, das Brillenglas transmittiert und aus der Rückfläche austritt und auf das Auge des Brillenträgers trifft, desto stärker ist das Erfordernis, von hinten auf das Brillenglas treffendes Licht dieses maßgeblichen Spektralbereichs durch Reflexion an der Rückfläche des Brillenglases ins Auge zu lenken. Der maßgebliche Winkelbereich liegt entsprechend der vorstehenden Forderung zwischen 30° und 45°.

Mit zunehmender Intransparenz des Brillenglases in diesem Spektralbereich ist es wünschenswerter, wenn der Reflexionsgrad der Beschichtung für unter einem Einfallswinkel auf die Rückfläche einfallenden Lichts der Wellenlänge 380 nm für jeden Einfallswinkel zwischen 30° und 45° größer als 10 % oder größer als 15 % oder größer als 20 % oder größer als 25 % oder größer als 30 % oder größer als 35 % oder sogar größer als 40 % ist.

Um zu verhindern, dass schädliches Licht von der Brillenglasrückseite in das Auge reflektiert wird, ist die Beschichtung nach der Erfindung weiter so ausgelegt, dass das Brillenglas eine für unter einem Einfallswinkel auf die Rückfläche einfallendes ultraviolettes Licht eine entspiegelnde Wirkung besitzt, welche derart ausgebildet ist, dass der Reflexionsgrad in einem Wellenlängenbereich zwischen 280 nm und einer zwischen 325 nm und 360 nm liegenden durch einen Reflexionsgrad von 5% definierten Grenzwellenlänge für jeden Einfallswinkel zwischen 30° und 45 unterhalb von 5 % liegt. Anders ausgedrückt ist die Beschichtung so ausgebildet, dass im Wellenlängenbereich zwischen 280 nm und der Grenzwellenlänge der Reflexionsgrad des auf die Rückfläche einfallenden ultravioletten Lichts demnach stets unterhalb von 5 % liegt. Bei der Grenzwellenlänge beträgt der Reflexionsgrad gerade 5 %.

Die eingangs gestellt Aufgabe wird durch das in Anspruch 1 angegebene und vorstehend beschriebene Brillenglas nach der zweiten Variante (ii) der der Erfindung zugrunde liegenden Idee vollumfänglich gelöst.

Vorteilhafte Weiterbildungen und Ausgestaltungen insbesondere der ersten Variante (i) der erfinderischen Idee, welche allerdings grundsätzlich auch mit Weiterbildungen und Ausgestaltungen der zweiten Variante (ii) der erfinderischen Idee kombiniert werden können, werden in den unmittelbar nachfolgenden Abschnitten beschrieben.

Der Massenanteil des UV-Absorbers im Grundmaterial ist vorteilhafterweise nicht nur so gewählt, dass der Transmissionsgrad für unter einem Einfallswinkel auf die Vorderfläche einfallendes, das Brillenglas transmittierendes und aus der Rückfläche ausfallendes Licht der Wellenlänge 380 nm für jeden Einfallswinkel zwischen 0° und 15° zwischen 25 % und 80 % ist, sondern auch so, dass der Transmissionsgrad für unter einem Einfallswinkel auf die Vorderfläche einfallendes, das Brillenglas transmittierendes und aus der Rückfläche ausfallendes Licht für alle Wellenlängen im Wellenlängenbereich zwischen 355 nm und 390 nm für jeden Einfallswinkel zwischen 0° und 15° größer als 5 %, vorzugsweise größer als 6 %, weiter vorzugsweise größer als 7 % ist. Der entsprechende Transmissionsgrad ist für Licht im Wellenlängenbereich zwischen 380 nm und 390 nm in besonderer Ausgestaltung sogar so gewählt, dass er den Transmissionsgrad bei 380 nm übersteigt. Zusätzlich oder alternativ kann der entsprechende Transmissionsgrad für Licht im Wellenlängenintervall zwischen 355 nm und 380 nm geringer als der Wert des Transmissionsgrad bei 380 nm sein. Damit ist sichergestellt, dass genügend nützliches, das Voranschreiten von Kurzsichtigkeit verzögerndes UV-Licht das Auge des Brillenträgers erreicht.

Um sicherzustellen, dass eine hinreichende Menge des auf die Vorderfläche in das Brillenglases auftreffenden Lichts im nützlichen Spektralbereich zwischen 355 nm und 390 nm bei chemisch geeignetem UV-Absorbermaterial und hinreichendem Massenanteil des gewählten UV-Absorbers in das Auge eintreten kann, kann der UV-Absorber im Grundmaterial einen so großen Massenanteil aufweisen, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° entweder im Wellenlängenintervall zwischen 325 nm und 360 nm oder im Wellenlängenintervall zwischen 325 nm und 350 nm oder im Wellenlängenintervall zwischen 325 nm und 340 nm liegt und dass der Transmissionsgrad für unter einem Einfallswinkel auf die Vorderfläche einfallendes, das Brillenglas transmittierendes und aus der Rückfläche ausfallendes Licht der Wellenlänge 380 nm für jeden Einfallswinkel zwischen 0° und 15° zwischen 25 % und 80 % beträgt und dass das Brillenglas eine für unter einem Einfallswinkel auf die Vorderfläche einfallendes Licht eine entspiegelnde Wirkung bewirkende Beschichtung umfasst, welche derart ausgebildet ist, dass der Reflexionsgrad für unter einem Einfallswinkel auf die Vorderfläche einfallendes Licht im Wellenlängenbereich zwischen 355 nm und 390 nm für jeden Einfallswinkel zwischen 0° und 15° kleiner als 5 %, vorzugsweise kleiner als 4 %, weiter vorzugsweise kleiner als 3 % ist.

Insbesondere bei klaren Korrektionsgläsern ist es sinnvoll, wenn deren Transmissionsgrad über den gesamten sichtbaren Spektralbereich möglichst hoch und weitgehend homogen ausgebildet ist. Aus diesem Grund sieht die Erfindung in besonderer Ausgestaltung eine Beschichtung vor, welche den Reflexionsgrad alternativ oder zusätzlich zwischen 380 nm und 780 nm oder zwischen 400 nm und 700 nm für jeden Einfallswinkel zwischen 0° und 15° kleiner als 5 %, vorzugsweise kleiner als 4 % weiter vorzugsweise kleiner als 3 % festlegt.

Bei einem Brillenglas der vorstehend beschriebenen Art, bei dem der Massenanteil des UV-Absorbers im Grundmaterial so groß ist, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° zwischen 325 nm und 350 nm liegt, kann die Beschichtung derart ausgebildet sein, dass die Beschichtung für unter einem Einfallswinkel auf die Rückfläche einfallendes ultraviolettes Licht eine reflektierende Wirkung bewirkt, welche derart ausgebildet ist, dass der Reflexionsgrad für unter einem Einfallswinkel auf die Rückfläche einfallendes ultraviolettes Licht im Wellenlängenbereich zwischen 280 nm und 335 nm für jeden Einfallswinkel zwischen 30° und 45° größer als 2 % ist. Im Wellenlängenbereich zwischen 280 nm und 310 nm kann der Reflexionsgrad sogar größer als 10 % oder vorteilhafterweise auch größer als 20 % sein.

Vorteilhafte Weiterbildungen und Ausgestaltungen insbesondere der zweiten Variante (ii) der erfinderischen Idee, welche allerdings grundsätzlich auch mit Weiterbildungen und Ausgestaltungen der ersten Variante (i) der erfinderischen Idee kombiniert werden können, werden in den dem vorliegenden Abschnitt unmittelbar nachfolgenden Abschnitten beschrieben.

Eine erfindungsgemäße Ausgestaltung des Brillenglases sieht vor, dass der Massenanteil des UV-Absorbers im Grundmaterial so groß ist, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° im Wellenlängenintervall zwischen 325 nm und 350 nm liegt, dass der Transmissionsgrad für unter einem Einfallswinkel auf die Vorderfläche einfallendes, das Brillenglas transmittierendes und aus der Rückfläche ausfallendes Licht der Wellenlänge 380 nm für jeden Einfallswinkel zwischen 0° und 15° kleiner als 50 % ist, dass das Brillenglas eine für unter einem Einfallswinkel auf die Rückfläche einfallendes ultraviolettes Licht eine entspiegelnde Wirkung bewirkende Beschichtung umfasst, welche derart ausgebildet ist, dass der Reflexionsgrad in einem Wellenlängenbereich zwischen 280 nm und einer zwischen 325 nm und 350 nm liegenden durch einen Reflexionsgrad von 5 % definierten Grenzwellenlänge für jeden Einfallswinkel zwischen 30° und 45 unterhalb von 5 % liegt. und dass der Reflexionsgrad für unter einem Einfallswinkel auf die Rückfläche einfallendes Licht der Wellenlänge 380 nm für jeden Einfallswinkel zwischen 30° und 45° größer als 8 % ist. Anders ausgedrückt ist die Beschichtung so ausgebildet, dass nach einer ersten Forderung im Wellenlängenbereich zwischen 280 nm und der Grenzwellenlänge der Reflexionsgrad des auf die Rückfläche einfallenden ultravioletten Lichts stets unterhalb von 5 % liegt. Bei der Grenzwellenlänge beträgt der Reflexionsgrad gerade 5 %. Die Grenzwellenlänge liegt vorzugsweise zwischen 325 nm und 350 nm. Nach einer zweiten Forderung ist die Beschichtung weiter so ausgebildet, dass der Reflexionsgrad für unter einem Einfallswinkel auf die Rückfläche einfallendes Licht der Wellenlänge 380 nm größer als 8 % ist. Diese Forderungen gelten für auf die Rückfläche des Brillenglases einfallendes Licht für jeden Einfallswinkel zwischen 30° und 45°.

Zur Sicherstellung, dass genügend Licht im oben beschriebenen nützlichen Spektralbereich das Auge des Brillenträgers erreicht, kann das Brillenglas bei der zuletzt beschriebenen Ausgestaltung nach der Erfindung dadurch gekennzeichnet sein, dass die Beschichtung derart ausgebildet ist, dass der Reflexionsgrad für unter einem Einfallswinkel auf die Rückfläche einfallendes Licht für jede Wellenlänge im Wellenlängenbereich zwischen 355 nm und 390 nm für jeden Einfallswinkel zwischen 30° und 45° größer als 5 % ist.

Zur Gewährleistung, dass sichtbares Licht durch die Vorderfläche in das Brillenglas eindringen kann, ist die Vorderflächenbeschichtung, also der auf der Vorderseite des Brillenglases angeordnete Beschichtungsteil, derart ausgebildet ist, dass der Reflexionsgrad für unter einem Einfallswinkel auf die Vorderfläche einfallendes Licht im Wellenlängenbereich zwischen 380 nm und 780 nm oder im Wellenlängenbereich zwischen 400 nm und 700 nm für jeden Einfallswinkel zwischen 0° und 15° kleiner als 5 % ist.

Zur Gewährleistung, dass gefährliches Licht durch Reflexion an der Rückfläche des Brillenglases in das Auge des Brillenträgers gelangt, kann die Beschichtung derart ausgebildet sein, dass der Reflexionsgrad für unter einem Einfallswinkel auf die Rückfläche einfallendes Licht im Wellenlängenbereich zwischen 280 nm und 325 nm für jeden Einfallswinkel zwischen 30° und 45° kleiner als 5 % ist.

Es sei klargestellt, dass bei einem erfindungsgemäßen Brillenglas sämtlicher vorstehend beschriebener Arten die Beschichtung vorderflächenseitig und/oder rückflächenseitig und/oder in das Grundmaterial mit dem UV-Absorber eingebettet sein kann. Die Beschichtung kann also z.B. nur vorderseitig auf dem Grundmaterial mit dem UV-Absorber des Brillenglases aufgebracht sein. Die Beschichtung kann z.B. auch nur rückseitig auf dem Grundmaterial mit dem UV-Absorber des Brillenglases aufgebracht sein. Es kann z.B. auch eine erste Teilbeschichtung vorderseitig auf dem Grundmaterial mit dem UV-Absorber des Brillenglases und eine zweite Teilbeschichtung rückseitig auf dem Grundmaterial mit dem UV-Absorber des Brillenglases aufgebracht sein.

Die Beschichtung, ggf. auch jede der Teilbeschichtungen, kann mehrere dielektrische Schichten umfassen, wobei jeweils benachbarte Schichten sich regelmäßig im in der Regel durch das Material vorgegebenen Brechungsindex und/oder der Schichtdicke unterscheiden. Schichten sind im Rahmen der vorliegenden Erfindung insbesondere solche mit einer Mindestdicke von 1 nm zu verstehen. Typische Materialien für derartige Beschichtungen sind Metalloxide, Metallfluoride, Metallnitride, diamantähnlicher Kohlenstoff oder Kombinationen davon. In Frage kommende Metalloxide sind z.B. eine oder mehrere Verbindungen der Gruppe Chromdioxid, Aluminiumoxid, Titandioxid, Indiumzinnoxid (ITO), Zirkoniumdioxid, Siliziumdioxid oder Kombinationen davon. Typische Schichtdicken liegen im Bereich zwischen wenigen Nanometern und mehreren hundert Nanometern.

Selbstverständlich kann das Brillenglas auch weitere Schichten, insbesondere Funktionsschichten der in der Beschreibungseinleitung beschriebenen Art, umfassen. Diese haben allerdings in der Regel keinen oder nur einen untergeordneten Einfluss auf das im Rahmen der vorliegenden Erfindung maßgebliche Transmissions- oder Reflexionsverhalten der Beschichtung insgesamt.

Die Erfinder stellen weiter ein computerimplementiertes Verfahren zum Berechnen eines Brillenglases mit einer objektseitigen Vorderfläche und einer augenseitigen Rückfläche umfassend ein Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers entsprechend der ersten Variante (i) der erfinderischen Idee bereit. Dieses computerimplementierte Verfahren ist gekennzeichnet durch die Schritte:
a) Bereitstellen von das Grundmaterial repräsentierenden Daten. Diese in Schritt a) bereitgestellten Daten können z.B. den Realteil n(λ) und ggf. den Imaginärteil k(λ) des dem Grundmaterial zuordenbaren komplexen Brechungsindexes umfassen.
b) Bereitstellen von den UV-Absorber repräsentierenden Daten. Diese in Schritt b) bereitgestellten Daten können z.B. den Realteil n(λ) und ggf. den Imaginärteil k(λ) des dem UV-Absorber zuordenbaren komplexen Brechungsindexes umfassen.
c) Bereitstellen von die Geometrie der Vorderfläche des Brillenglases repräsentierenden Daten. Diese in Schritt c) bereitgestellten Daten können z.B. die Krümmung der Vorderfläche, die ggf. auch zu Null gesetzt werden kann, umfassen. Optional kann auch die (vorderflächige Teil-)Beschichtung, d.h. u.a. auch eine Abfolge aus einer Vielzahl unterschiedlicher Schichten, der Vorderfläche des Brillenglases berücksichtigt werden.
d) Bereitstellen von die Geometrie der Rückfläche des Brillenglases repräsentierenden Daten. Diese in Schritt d) bereitgestellten Daten können z.B. die Krümmung der Rückfläche, die ggf. auch zu Null gesetzt werden kann, umfassen. Optional kann auch die (rückflächige Teil-)Beschichtung, d.h. u.a. auch eine Abfolge aus einer Vielzahl unterschiedlicher Schichten, der Rückfläche des Brillenglases berücksichtigt werden.
e) Bereitstellen von einen Massenanteil des UV-Absorbers im Grundmaterial repräsentierenden Daten.
f) Berechnen des Transmissionsgrads für unter verschiedenen Einfallswinkeln auf die Vorderfläche einfallendes, das Brillenglas transmittierendes und aus der Rückfläche ausfallendes Licht unterschiedlicher Wellenlängen basierend auf den in den Schritten a) bis e) bereitgestellten Daten unter Variation der in den Schritten b) und/oder e) bereitgestellten Daten bis ein geeigneter UV-Absorber identifiziert ist und/oder bis die den Massenanteil des UV-Absorbers im Grundmaterial repräsentierenden Daten dergestalt sind, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° zwischen 325 nm und 360 nm liegt und der Transmissionsgrad für unter einem Einfallswinkel auf die Vorderfläche einfallendes, das Brillenglas transmittierendes und aus der Rückfläche ausfallendes Licht einer Wellenlänge zwischen 355 nm und 390 nm für jeden Einfallswinkel zwischen 0° und 15° zwischen 25 % und 80 % beträgt
g) Ausgeben der den UV-Absorber repräsentierenden Daten und der den Massenanteil des UV-Absorbers im Grundmaterial repräsentierenden Daten für die die in Schritt f) definierten Bedingungen für den Transmissionsgrad erfüllt sind.

Zur Durchführung des vorstehend beschriebenen Verfahrens ist die nachfolgend beschriebene Vorrichtung ausgebildet. Diese ausgebildete Vorrichtung zum Berechnen eines Brillenglases mit einer objektseitigen Vorderfläche und einer augenseitigen Rückfläche umfassend ein Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers ist gekennzeichnet durch die folgenden Komponenten:
a) Mittel zum Bereitstellen von das Grundmaterial repräsentierenden Daten (z.B. den dem Grundmaterial zuordenbaren Realteil n(λ) und ggf. den Imaginärteil k(λ) des dem Grundmaterial zuordenbaren komplexen Brechungsindexes)
b) Mittel zum Bereitstellen von den UV-Absorber (z.B. den dem UV-Absorber zuordenbaren Imaginärteil k(λ) des komplexen Brechungsindexes und ggf. den dem UV-Absorber zuordenbaren Realteil n(λ) des komplexen Brechungsindexes) repräsentierenden Daten
c) Mittel zum Bereitstellen von die Geometrie der Vorderfläche des Brillenglases repräsentierenden Daten (z.B. die Krümmung der Fläche, die ggf. auch zu Null gesetzt werden kann; optional kann auch die Beschichtung, d.h. u.a. auch ein Stack aus einer Vielzahl unterschiedlicher Schichten, der Vorderfläche des Brillenglases berücksichtigt werden)
d) Mittel zum Bereitstellen von die Geometrie der Rückfläche des Brillenglases repräsentierenden Daten (z.B. die Krümmung der Fläche, die ggf. auch zu Null gesetzt werden kann; optional kann auch die Beschichtung, d.h. u.a. auch ein Stack aus einer Vielzahl unterschiedlicher Schichten, der Rückfläche des Brillenglases berücksichtigt werden)
e) Mittel zum Bereitstellen von einen Massenanteil des UV-Absorbers im Grundmaterial repräsentierenden Daten
f) Mittel zum Berechnen des Transmissionsgrads für unter verschiedenen Einfallswinkeln auf die Vorderfläche einfallendes, das Brillenglas transmittierendes und aus der Rückfläche ausfallendes Licht unterschiedlicher Wellenlängen basierend auf den in den Schritten a) bis e) bereitgestellten Daten unter Variation der in den Schritten b) und/oder e) bereitgestellten Daten bis ein geeigneter UV-Absorber identifiziert ist und/oder bis die den Massenanteil des UV-Absorbers im Grundmaterial repräsentierenden Daten dergestalt sind, dass die durch einen Transmissionsgrad von 2 % für unter einem Einfallswinkel auf die Vorderfläche einfallendes, das Brillenglas transmittierendes und aus der Rückfläche ausfallendes Licht definierte obere Grenzwellenlänge der Sperrfilterwirkung für jeden Einfallswinkel zwischen 0° und 15° zwischen 325 nm und 360 nm liegt und der Transmissionsgrad für unter einem Einfallswinkel auf die Vorderfläche einfallendes, das Brillenglas transmittierendes und aus der Rückfläche ausfallendes Licht einer Wellenlänge eines Wellenlängenbereichs zwischen 355 nm und 390 für jeden Einfallswinkel zwischen 0° und 15° zwischen 25 % und 80 % beträgt
g) Mittel zum Ausgeben der den UV-Absorber repräsentierenden Daten und des den Massenanteil des UV-Absorbers im Grundmaterial repräsentierenden Daten für die die in Schritt f) definierten Bedingungen für den Transmissionsgrad erfüllt sind.

Die Erfinder stellen weiter ein computerimplementiertes Verfahren zum Berechnen eines als klares Korrektionsglas ausgebildeten Brillenglases mit einer objektseitigen Vorderfläche und einer augenseitigen Rückfläche umfassend ein Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers entsprechend der zweiten Variante (ii) der erfinderischen Idee bereit. Dieses computerimplementierte Verfahren ist gekennzeichnet durch die Schritte:
a) Bereitstellen von das Grundmaterial mit dem UV-Absorber repräsentierenden Daten (z.B. den Realteil n(λ) und ggf. den Imaginärteil k(λ) des dem Grundmaterial mit dem UV-Absorber zuordenbaren komplexen Brechungsindexes)
b) Bereitstellen von die Geometrie der Vorderfläche und/oder die Geometrie der Rückfläche des Brillenglases repräsentierenden Daten (z.B. die Krümmung der jeweiligen Fläche, die ggf. auch zu Null gesetzt werden kann)
c) Bereitstellen von eine Beschichtung mit einer oder mehreren Schichten repräsentierenden Daten (z.B. Dicken und Brechungsindices)
d) Berechnen des Reflexionsgrads für unter verschiedenen Einfallswinkeln auf die Rückfläche des Brillenglases einfallenden Lichts unterschiedlicher Wellenlänge unter Variation der in dem Schritt c) bereitgestellten Daten bis der Reflexionsgrad in einem Wellenlängenbereich zwischen 280 nm und einer zwischen 325 nm und 360 nm liegenden durch einen Reflexionsgrad von 5% definierten Grenzwellenlänge für jeden Einfallswinkel zwischen 30° und 45 unterhalb von 5 % liegt und der Reflexionsgrad für unter einem Einfallswinkel auf die Rückfläche einfallendes Licht einer Wellenlänge in einem Wellenlängenbereich zwischen 355 nm und 390 nmfür jeden Einfallswinkel zwischen 30° und 45° größer als 8 % ist,
e) Ausgeben der die Beschichtung repräsentierenden Daten für die die in Schritt d) definierten Bedingungen für den Reflexionsgrad erfüllt sind.

Die eingangs gestellte Aufgabe wird durch das in Anspruch 12 angegebene und vorstehend beschriebene computerimplementierte Verfahren zur Berechnung eines Brillenglases nach der zweiten Variante (ii) der der Erfindung zugrunde liegenden Idee vollumfänglich gelöst.

Zur Durchführung des vorstehend beschriebenen computerimplementierten Verfahrens ist die nachfolgend beschriebene erfindungsgemäße (Computer-)Vorrichtung ausgebildet. Die erfindungsgemäße Vorrichtung zum Berechnen eines Brillenglases mit einer objektseitigen Vorderfläche und einer augenseitigen Rückfläche umfassend ein Grundmaterial mit einem von Null verschiedenen Massenanteil eines für unter einem Einfallswinkel auf die Vorderfläche einfallendes, das Brillenglas transmittierendes und aus der Rückfläche ausfallendes ultraviolettes Licht eine Sperrfilterwirkung bewirkenden UV-Absorbers ist gekennzeichnet durch die den o.a. Verfahrensschritten korrespondierenden Komponenten, nämlich
a) Mittel zum Bereitstellen von das Grundmaterial mit dem UV-Absorber repräsentierenden Daten
b) Mittel zum Bereitstellen von die Geometrie der Vorderfläche und/oder die Geometrie der Rückfläche des Brillenglases repräsentierenden Daten
c) Mittel zum Bereitstellen von eine Beschichtung mit einer oder mehreren Schichten repräsentierenden Daten
d) Mittel zum Berechnen des Reflexionsgrads für unter verschiedenen Einfallswinkeln auf die Rückfläche des Brillenglases einfallenden Lichts unterschiedlicher Wellenlänge unter Variation der in dem Schritt c) bereitgestellten Daten bis der Reflexionsgrad in einem Wellenlängenbereich zwischen 280 nm und einer zwischen 325 nm und 360 nm liegenden durch einen Reflexionsgrad von 5% definierten Grenzwellenlänge für jeden Einfallswinkel zwischen 30° und 45 unterhalb von 5 % liegt und der Reflexionsgrad für unter einem Einfallswinkel auf die Rückfläche einfallendes Licht einer Wellenlänge in einem Wellenlängenbereich zwischen 355 nm und 390 nm für jeden Einfallswinkel zwischen 30° und 45° größer als 8 % ist,
e) Mittel zum Ausgeben der die Beschichtung repräsentierenden Daten für die die in Schritt d) definierten Bedingungen für den Reflexionsgrad erfüllt sind.

Die eingangs gestellte Aufgabe wird durch die vorstehend beschriebene computerimplementierte Vorrichtung zur Berechnung eines Brillenglases nach der zweiten Variante (ii) der der Erfindung zugrunde liegenden Idee vollumfänglich gelöst.

In besonderer Ausgestaltung des vorstehend beschriebenen Verfahrens und der vorstehend beschriebenen Vorrichtung zur Berechnung eines Brillenglases nach der zweiten Variante (ii) ist vorgesehen, dass die Beschichtung mehrere dielektrische Schichten umfasst und dass die die Beschichtung repräsentierenden Daten die Brechungsindices und die Dicken der dielektrischen Schichten umfasst. Insbesondere kann im Verfahrensschritt d) die Anzahl der dielektrischen Schichten und/oder die Art der dielektrischen Schichten und/oder die Reihenfolge der dielektrischen Schichten und/oder die Schichtdicken der dielektrischen Schichten so lange verändert werden, bis der Reflexionsgrad in einem Wellenlängenbereich zwischen 280 nm und einer zwischen 325 nm und 360 nm liegenden durch einen Reflexionsgrad von 5% definierten Grenzwellenlänge für jeden Einfallswinkel zwischen 30° und 45 unterhalb von 5 % liegtund der Reflexionsgrad für unter einem Einfallswinkel auf die Rückfläche einfallendes Licht einer Wellenlänge in einem Wellenlängenbereich zwischen 355 nm und 390 nm für jeden Einfallswinkel zwischen 30° und 45° größer als 8 % ist. Im Schritt e) werden dann in entsprechender Weise die Anzahl der dielektrischen Schichten und/oder die Art der dielektrischen Schichten und/oder die Reihenfolge der dielektrischen Schichten und/oder die Dicken der dielektrischen Schichten ausgegeben.

In entsprechender Weise können die unter den Komponenten d) und e) der entsprechenden erfindungsgemäßen Vorrichtung genannten Mittel zur Durchführung der vorstehend angegebenen Verfahrensschritte ausgebildet sein.

Ein erfindungsgemäßes Verfahren zum Herstellen eines Brillenglases verwendet die in Schritt e) nach dem zuletzt beschriebenen computerimplementierten Rechenverfahren nach Variante (ii) ausgegebenen Daten. Erfindungsgemäß kann auch ein Computerprogramm mit Programmcode zur Durchführung aller Verfahrensschritte nach dem oben beschriebenen computerimplementierten Rechenverfahren nach Variante (ii) eingerichtet sein, wenn das Computerprogramm in einem Computer geladen und/oder in einem Computer ausgeführt wird.

Auf einem nichtflüchtigen Speichermedium kann der Programmcode des Computerprogramms zur Durchführung aller Verfahrensschritte nach dem oben beschriebenen computerimplementierten Rechenverfahren nach Variante (ii) eingerichtet sein, wenn das Computerprogramm in einem Computer geladen und/oder in einem Computer ausgeführt wird.

Die Erfindung wird nachfolgend anhand der Zeichnung näher beschrieben. Es zeigen:
- Figur 1: Transmission und Reflexion eines auf die Vorderfläche eines Brillenglases aus einem Grundmaterial mit UV-Absorber auftreffenden Lichtstrahls
- Figur 2: Transmissionsspektren im Bereich um 380 nm basierend auf Brillengläsern unterschiedlicher Grundmaterialien mit/ohne UV-Absorber mit einer dioptrischen Wirkung von -2 dpt.
- Figur 3: simulierte Transmissionskurven von Brillengläsern unterschiedlicher Grundmaterialien mit unterschiedlichen UV-Absorbern
- Figur 4: simulierte Reflexionskurven eines auf einem Grundmaterial mit UV-Absorber basierenden Brillenglases mit Rückflächenbeschichtung bei unterschiedlichen Einfallswinkeln von Licht auf die Rückfläche
- Figur 5: simulierte Transmissionskurven von Brillengläsern gleichen Grundmaterialien und UV-Absorbern, aber unterschiedlicher Vorder- und Rückflächenbeschichtung
- Figur 6: Brillenglas aus einem Grundmaterial mit UV-Absorber sowie Vorder- und Rückflächenbeschichtung
- Figur 7: simulierte Reflexionskurven eines auf einem Grundmaterial mit UV-Absorber basierenden Brillenglases mit Rückflächenbeschichtung bei unterschiedlichen Einfallswinkeln von Licht auf die Rückfläche

Die vorliegend beschriebene Erfindung beinhaltet -wie oben bereits im Detail erläutert wurdezwei unabhängige, aber durchaus miteinander kombinierbare Möglichkeiten, mehr Licht der Wellenlänge um 380 nm ins Auge dringen zu lassen, nämlich (i) Modifikation des UV-Absorbers im Grund- oder Substratmaterial des Brillenglases gegenüber herkömmlichen Brillengläsern und (ii) Optimierung insbesondere der rückseitigen Antireflexbeschichtung speziell im Winkelbereich von 30° bis 45°.

### Zu (i) Modifikation des UV-Absorbers im Substratmaterial

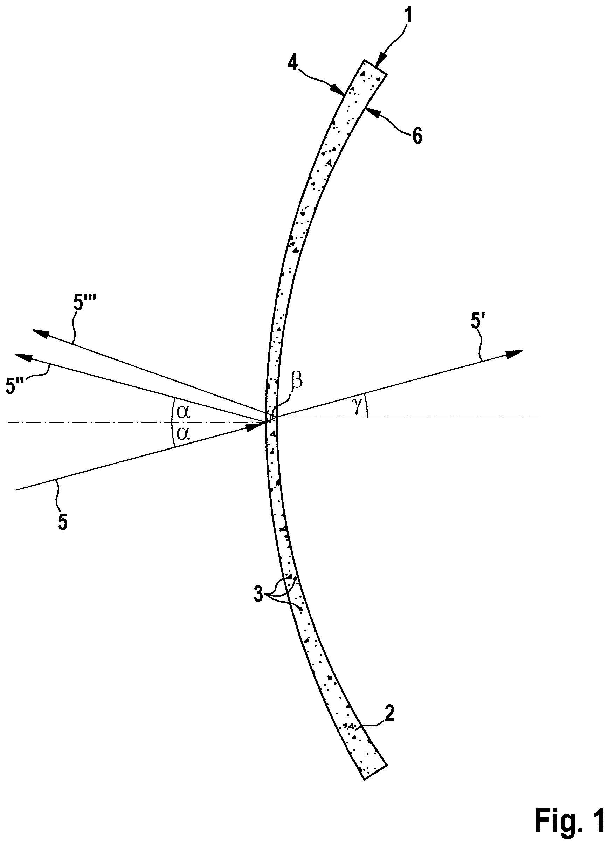

Die Figur 1 zeigt ein Brillenglas 1 eines Grundmaterials 2 mit einem gewissen Massenanteil eines UV-Absorbers 3, auf dessen Vorderfläche 4 unter einem Winkel α ein Lichtstrahl 5 einfällt, das Brillenglas 1 unter teilweiser Absorption transmittiert und auf dessen Rückfläche 6 als Lichtstrahl 5' unter dem Austrittswinkel γ wieder verlässt. Weiter ist gezeigt, dass ein Teil des Lichtstrahls 5 an der Vorderfläche 4 und an der Rückfläche 6 unter den Winkeln α und β reflektiert wird und als Lichtstrahlen 5" und 5"' auf der Objektseite propagieren. Die Existenz des UV-Absorbers 3 ist in der Figur durch Punkte kenntlich gemacht.

Es zeigt sich, dass es eine Grenzwellenlänge λ_{UV cut-off} gibt, unterhalb der ultraviolettes Licht praktisch vollständig vom Grundmaterial (mit UV-Absorber) des Brillenglases absorbiert wird. Diese Grenzwellenlänge λ_{UV cut-off} ist durch einen Transmissionsgrad von 2 % gekennzeichnet und wird UV cut-off Wellenlänge oder kurz UV cut-off bezeichnet. Die Einstellung des UV cutoffs erfolgt in den unterschiedlichen Substratmaterialien anhand der Auswahl des UV-Absorbers, der kompatibel mit dem Substratmaterial und den Verarbeitungsbedingungen sein muss, sowie der Optimierung seiner Konzentration. Beide Faktoren können beeinflusst werden, um die Absorption von auf die Vorderfläche eines Brillenglases treffenden Lichts rund um 380 nm zu steuern.

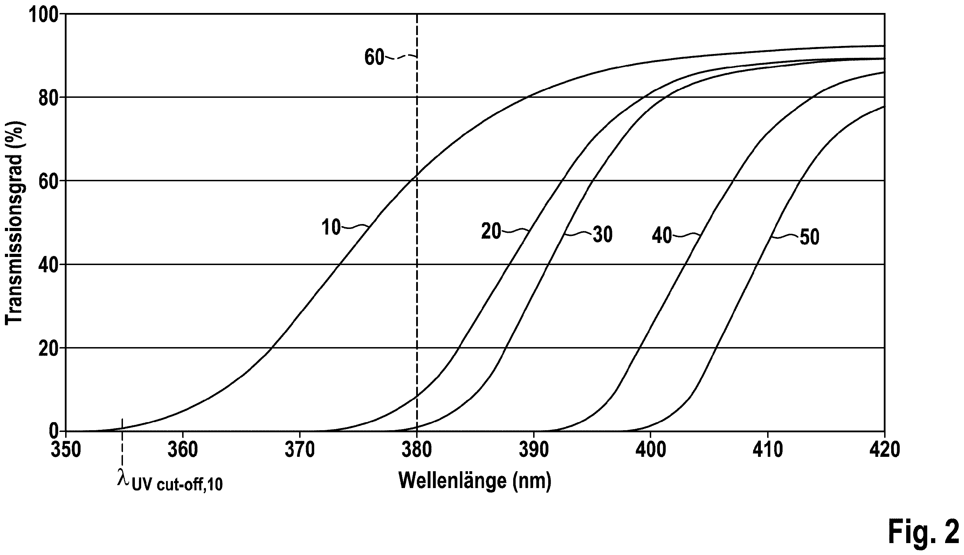

Der derzeitige Zustand in Hinsicht auf die Transmissionseigenschaften auf unterschiedlichen Grundmaterialien basierenden Brillengläsern mit einer sphärischen Wirkung von -2,0 dpt bei einer Wellenlänge λ um 380 nm ist in Figur 2 dargestellt. Gezeigt ist der Transmissionsgrad T(λ) von Brillengläsern aus unter den Handelsnamen CR 39 (Kurve 10), Polycarbonat (Kurve 20), MR 8 (Kurve 30), MR 7 (Kurve 40) und MR 174 (Kurve 50) erhältlichen chemischen Verbindungen (siehe auch Tabelle 1 oben). Die UV cut-off Wellenlänge λ_{UV cut-off, 10} von CR 39 (Kurve 10) ist in der Figur 2 exemplarisch dargestellt.

Ziel ist es, die Transmission bei einer Wellenlänge von etwa 380 nm (in der Figur 2 hervorgehoben durch eine vertikale Linie 60) zu maximieren, während gleichzeitig ein UV cut-off von 340 nm bis 360 nm realisiert wird, um möglichst viel schädliche Strahlung vom Auge des Brillenträgers fernzuhalten. In dieser Hinsicht fällt das 1.50 Index-Polymer CR 39 auf, weil es bereits im derzeitigen Zustand einen UV cut-off von 355 nm aufweist und damit für Licht rund um 380 nm eine signifikante Transmission aufweist (zwischen 40 und 60% je nach Beschichtung). Alle anderen in der Figur 2 gezeigten und auf anderen chemischen Verbindungen als Grundmaterial beruhenden Brillengläser haben einen UV cut-off bei Wellenlängen über 370 nm. Ursache ist, dass diese bereits einen UV-Absorber beinhalten, der im Hinblick auf hinreichend verminderte UV-Degradation des Grundmaterials und/oder herkömmlichen Schutz des Auges vor schädlicher UV-Strahlung über den gesamten ultravioletten Spektralbereich optimiert ist.

Um den UV cut-off bei diesen anderen Brillengläsern in vorstehend beschriebener erfindungsgemäßer Weise zu modifizieren, können typischerweise folgende UV-Absorber eingesetzt werden:
2-(2'-Hydroxy-5'-tert-octylphenyl)benzotriazole. Diese Verbindung wird unter den folgenden Markennamen verkauft:
   - BASF Tinuvin 329,
   - Cytec Cyasorb UV5411,
   - Viosorb 583 (Kyodo Chemical Co.)
   - Seesorb 709 (Shipro Kasei Co.),
2-(2-Hydroxy-5-tert-butyl)benzotriazole. Diese Verbindung wird unter dem folgenden Markennamen verkauft:
   - BASF Tinuvin PS
2-(2'-Hydroxy-3'-tert-butyl-5'-methylphenyl)-5-chlorobenzotriazole. Diese Verbindung wird unter dem Markennamen
   - BASF Tinuvin 326
   verkauft.
(2-Hydroxy-3-dodecyl-5-methylphenyl)benzotriazole. Diese Verbindung wird unter dem Markennamen
   - BASF Tinuvin 571
   verkauft.

Es ist bei der Einstellung des UV-Absorbers genau darauf zu achten, dass von der schädlichen UV-Strahlung möglichst wenig bis gar nichts in das Auge gelangen kann, während die Transmission der nützlichen Wellenlängen optimiert wird.

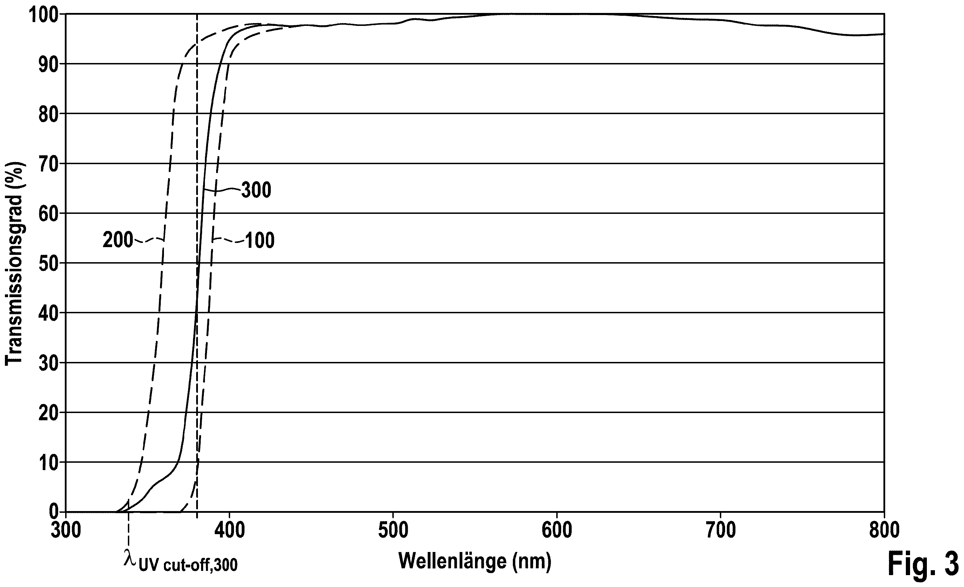

Die Figur 3 zeigt theoretische simulierte Transmissionsspektren für beidseitig mit einer Antireflexionsbeschichtung beschichtete MR 8-Substrate mit verschiedenem UV-AbsorberGehalt. Die Simulation erfolgte über die im allgemeinen Beschreibungsteil beschriebenen Verfahren und unter Verwendung der in der Beschreibungseinleitung genannten kommerziell erhältlichen Software. Die Kurve 100 zeigt den Transmissionsgrad für ein derzeit kommerziell erhältliches Brillenglas mit einem mit einem UV-Absorber versetzten Grundmaterial. Die Kurve 200 zeigt den Transmissionsgrad für ein Brillenglas mit einem Grundmaterial ohne UV-Absorber, welches allerdings nicht kommerziell erhältlich ist. Die Kurve 200 zeigt den Transmissionsgrad für ein im Hinblick auf die Erfindung optimiertes Brillenglas, bei dem gegenüber dem des kommerziell erhältlichen Brillenglases weniger UV-Absorber dem Grundmaterial zugesetzt ist. Eine Verschiebung des UV cut-off hin zu kleineren Wellenlängen kann demnach durch Reduktion des UV-Absorber-Gehalts erreicht werden.

Neben der Einstellung des UV-Absorbers sollte dann auch die üblicherweise vorhandene Antireflexionsbeschichtung komplementär modifiziert werden. Hierfür wird für Vorder- und Rückseitenbeschichtung jeweils eine Antireflexionsbeschichtung benötigt, die relativ viel Strahlung der Wellenlängen um 380 nm durchlässt.

Nachfolgend wird die Synthese der vorstehend beschriebenen Substrate beispielhaft skizziert.

### a) Synthesebeispiel 1 mit Standard-UV-Absorber (Kurve 100 in der Figur 3)

49,8 g von 2,5- und 2,6-Bis-(isocyanatomethyl)bicyclo[2.2.1]-heptan, 0.05 g eines UV-Absorbers (BASF SE, Produktname: Tinuvin 329), 0.06 g Dibutylzinndichlorid und 0.11 g von ZELEC UN wurden bei 20°C gemischt und gelöst bis eine homogene Mischung entstanden ist. Zu dieser Mischung wurden 23,9 g Pentaerythritol-tetrakis-(3-mercaptopropionat) und 25,9g 4-Mercaptomethyl-3,6-dithia-1,8-octandithiol gegeben und wiederum gerührt bis eine homogene Mischung entstanden ist. Diese Mischung wird für eine Stunde bei < 500 Pa entgast und dann filtriert durch einen 5 µm Filter. Im Anschluss daran wird die Lösung in eine Formschale abgefüllt. Die Mischung wird über einen Zeitraum von 45 Stunden von Raumtemperatur auf 130 °C erwärmt. Danach wird die Formschale aus dem Ofen entnommen, geöffnet und das Halbfabrikat bei 60 °C für eine Stunde getempert. Es ergibt sich ein UV-Schutz nach dem 2 %-Kriterium ab 380 nm.

### b) Synthesebeispiel 2 ohne Standard-UV-Absorber (Kurve 200 in der Figur 3)

49,8 g von 2,5- und 2,6-Bis-(isocyanatomethyl)bicyclo[2.2.1]-heptan, 0.06 g Dibutylzinndichlorid und 0.11 g von ZELEC UN wurden bei 20°C gemischt und gelöst bis eine homogene Mischung entstanden ist. Zu dieser Mischung wurden 23,9 g Pentaerythritol-tetrakis-(3-mercaptopropionat) und 25,9g 4-Mercaptomethyl-3,6-dithia-1,8-octandithiol gegeben und wiederum gerührt bis eine homogene Mischung entstanden ist. Diese Mischung wird für eine Stunde bei < 500 Pa entgast und dann filtriert durch einen 5 µm Filter. Im Anschluss daran wird die Lösung in eine Formschale abgefüllt. Die Mischung wird über einen Zeitraum von 45 Stunden von Raumtemperatur auf 130 °C erwärmt. Danach wird die Formschale aus dem Ofen entnommen, geöffnet und das Halbfabrikat bei 60 °C für eine Stunde getempert. Es entsteht ein UV-Schutz (2%-Kriterium) ab 330 nm.

### c) Synthesebeispiel 3 mit wenig Standard-UV-Absorber (Kurve 300 in der Figur 3)

49,8 g von 2,5- und 2,6-Bis-(isocyanatomethyl)bicyclo[2.2.1]-heptan, 0.03 g eines UV-Absorbers (BASF SE, Produktname: Tinuvin 329), 0.06 g Dibutylzinndichlorid und 0.11 g von ZELEC UN wurden bei 20°C gemischt und gelöst bis eine homogene Mischung entstanden ist. Zu dieser Mischung wurden 23,9 g Pentaerythritol-tetrakis-(3-mercaptopropionat) und 25,9g 4-Mercaptomethyl-3,6-dithia-1,8-octandithiol gegeben und wiederum gerührt bis eine homogene Mischung entstanden ist. Diese Mischung wird für eine Stunde bei <500 Pa entgast und dann filtriert durch einen 5µm Filter. Im Anschluss daran wird die Lösung in eine Formschale abgefüllt. Die Mischung wird über einen Zeitraum von 45 Stunden von Raumtemperatur auf 130 °C erwärmt. Danach wird die Formschale aus dem Ofen entnommen, geöffnet und das Halbfabrikat bei 60°C für eine Stunde getempert. Es ergibt sich ein UV-Schutz (2%-Kriterium) ab 340 nm.

Die komplementäre Modifizierung der Antireflexbeschichtung zum Erhalt der Transmissionskurve 300 erfolgt dadurch, dass die Vorder- und Rückseitenbeschichtung jeweils eine Entspiegelung benötigt, die relativ viel Strahlung der Wellenlängen um 380 nm durchlässt. Im Idealfall kann die Beschichtung so gewählt werden, dass im Bereich um 315 nm speziell auf der Rückseite wenig Strahlung reflektiert wird. Insbesondere kann die beidseitige Beschichtung mit der in der nachfolgend im Zusammenhang mit der Optimierung der rückseitigen Antireflexbeschichtung diskutierten in Tabelle 2 gezeigten Schichtsequenz realisiert werden.

### Zu (ii) Optimierung insbesondere der rückseitigen Antireflexbeschichtung speziell im Winkelbereich zwischen 30° und 45°

Zentrale Kriterien der Variante (ii) sind einerseits die Erhöhung der Reflexion von Wellenlängen um 380 nm und andererseits die Bereitstellung eines gleichzeitigen Schutzes durch geringe Reflexion von gefährlicher UV Strahlung um 310 nm.

Von hinten auf die Rückseite des Brillenglases treffendes Licht kann in überwiegend nur dann in das Auge des Brillenträgers gelangen, wenn es in einem Einfallswinkel im Winkelbereich zwischen 30° und 45° auf die Rückfläche trifft. Hierzu wird insbesondere auf die Ausführungen in der US 8,870,374 B2 und die Beschreibung auf der URL http://www.essilor.de/brillenglaser/veredelungen/Seiten/CrizalUV.aspx verwiesen.

### a) erstes Ausführungsbeispiel für eine Antireflexionsbeschichtung

Unter Verwendung der in der Beschreibungseinleitung genannten Software der Firma OptiLayer und unter Anwendung des im allgemeinen Beschreibungsteil vorgestellten Verfahrens wurde in der nachfolgenden Tabelle 2 angegebene Schichtfolge für eine Antireflexionsbeschichtung ermittelt:

**Tabelle 2: Antireflexionsbeschichtung nach dem ersten Ausführungsbeispiel**

| **Schicht** | **Dicke (nm)** |
|---|---|
| Grundmaterial mit UV-Absorber | |
| Hartschicht | 3000,0 |
| ZrO₂ | 18,3 |
| SiO₂ | 30,1 |
| ZrO₂ | 81,1 |
| TiO₂ | 12,2 |
| ZrO₂ | 40,8 |
| ITO | 3,0 |
| TiO₂ | 5,0 |
| SiO₂ | 88,1 |

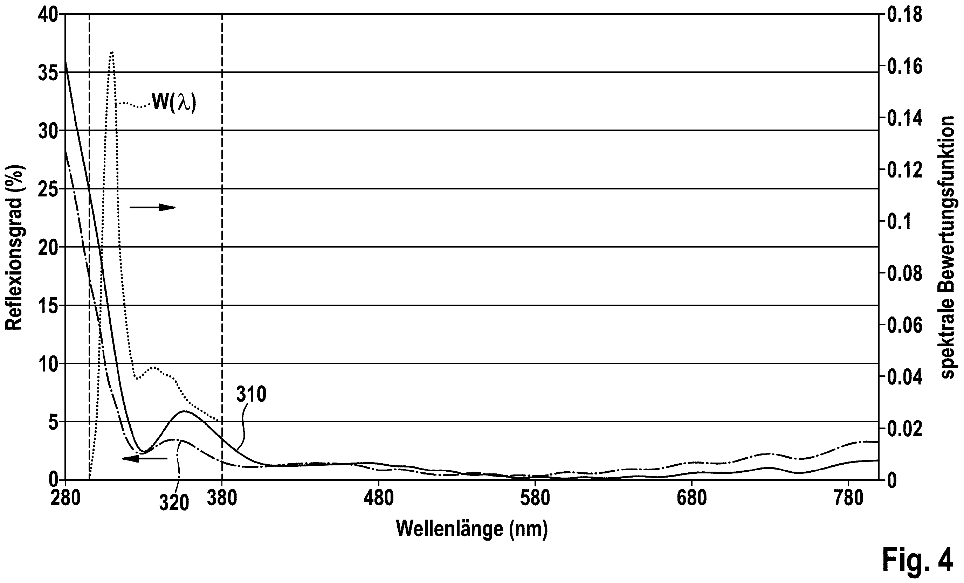

Die Transmissionsspektren für die drei vorstehend unter dem Kapitel "Zu (i) Modifikation des UV-Absorbers im Substratmaterial" beschriebenen Brillengläser mit einheitlichem Grundmaterial MR 8 und unterschiedlichen Massenanteilen eines UV-Absorbers unter Verwendung einer beidseitigen Beschichtung nach der Tabelle 2 sind in der Figur 3 gezeigt. Der Reflexionsgrad für unterschiedliche Einfallswinkel auf die Rückseite der Brillengläser ist weitgehend unabhängig vom UV-Absorbergehalt im Grundmaterial und für die Einfallswinkel 0° (Kurve 310) und 35° (Kurve 320) in der Figur 4 dargestellt. Die Reflexionskurven 310 und 320 korrespondieren zur Transmissionskurve 300 des Brillenglases mit mittlerem UV-Absorbergehalt. Die Figur 4 zeigt des Weiteren zur Demonstration der Unterscheidung zwischen "nützlicher" und "gefährlicher" UV-Strahlung die Bewertungsfunktion W(λ) nach der Norm DIN EN ISO 13666:2013-10.

Die Reflexion für das vorliegende Anwendungsbeispiel liegt für nützliche UV-Wellenlängen zwischen 355 nm und 390 nm bei nur 1 bis 6 %. Dadurch wird gewährleistet, dass die UV-Durchlässigkeit in diesem Bereich nicht durch die Beschichtung beeinträchtigt wird. Die gepunktete Kurve zeigt an, welche Wellenlängen besonders schädlich sind (λ < 325 nm). Diese werden durch den UV-Absorber mit einem cut-off bei ca. 355 nm weiterhin im Substrat absorbiert.

### a) zweites Ausführungsbeispiel für eine Antireflexionsbeschichtung

Unter Verwendung der in der Beschreibungseinleitung genannten Software der Firma OptiLayer und unter Anwendung des im allgemeinen Beschreibungsteil vorgestellten Verfahrens wurde in der nachfolgenden Tabelle 3 angegebene Schichtfolge für eine Antireflexionsbeschichtung ermittelt:

**Tabelle 3: Antireflexionsbeschichtung nach dem zweiten Ausführungsbeispiel**

| **Schicht** | **Dicke (nm)** |
|---|---|
| Grundmaterial mit UV-Absorber | |
| Hartschicht | 3000,0 |
| ZrO₂ | 6,0 |
| SiO₂ | 218,2 |
| TiO₂ | 25,9 |
| SiO₂ | 16,4 |
| TiO₂ | 66,1 |
| SiO₂ | 20,6 |
| ITO | 3,0 |
| TiO₂ | 5,4 |
| SiO₂ | 71,7 |

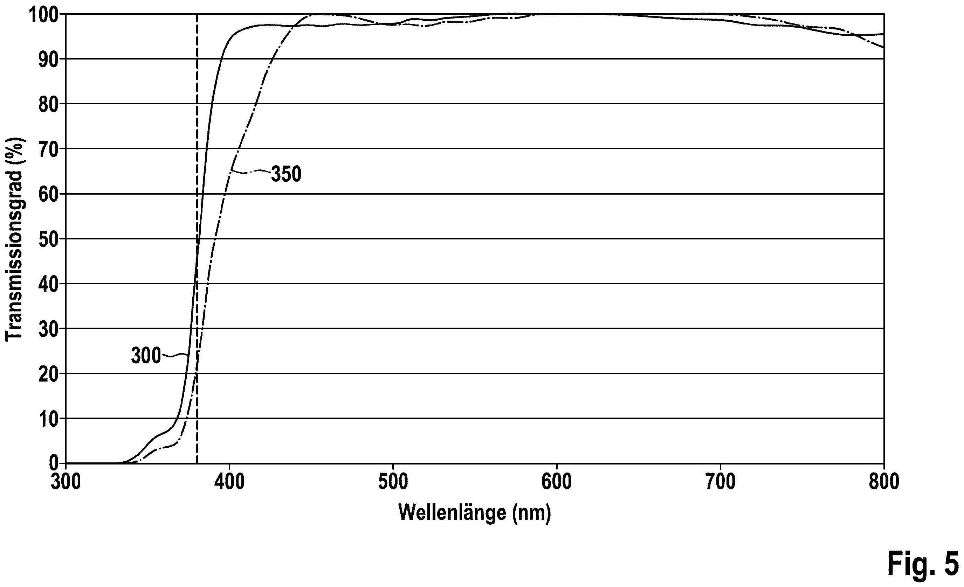

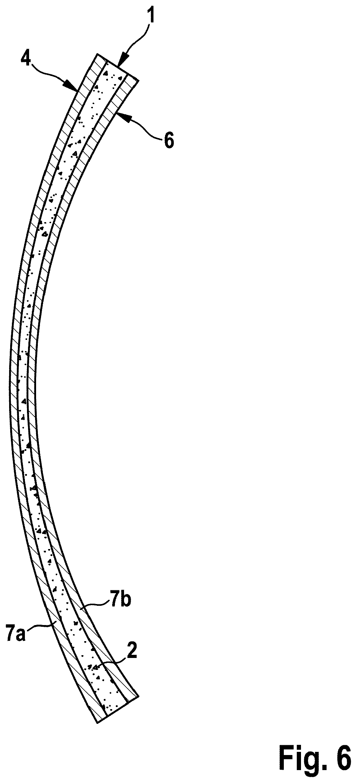

Das Transmissionsspektrum für ein Brillenglas mit einem MR 8 Grundmaterial und UV-Absorber der unter Abschnitt a) des Kapitels "Zu (i) Modifikation des UV-Absorbers im Substratmaterial" angegebenen Zusammensetzung und einer beidseitigen Beschichtung mit der in Tabelle 3 angegebenen Schichtfolge zeigt die Figur 5 als Kurve 350. Zum Vergleich ist auch die in Figur 3 gezeigte Kurve 300 in die Figur 5 eingezeichnet. Die Figur 6 zeigt zur Klarstellung das Brillenglas 1 aus dem mit dem UV-Absorber versetzten Grundmaterial 2 und der aus den beiden vorderseitig und rückseitig angeordneten Teilbeschichtungen 7a und 7b bestehenden Beschichtung. Jede der Teilbeschichtungen 7a, 7b weist ausgehend vom Grundmaterial (=Substrat) die in der Tabelle 3 angegebene Schichtfolge auf.

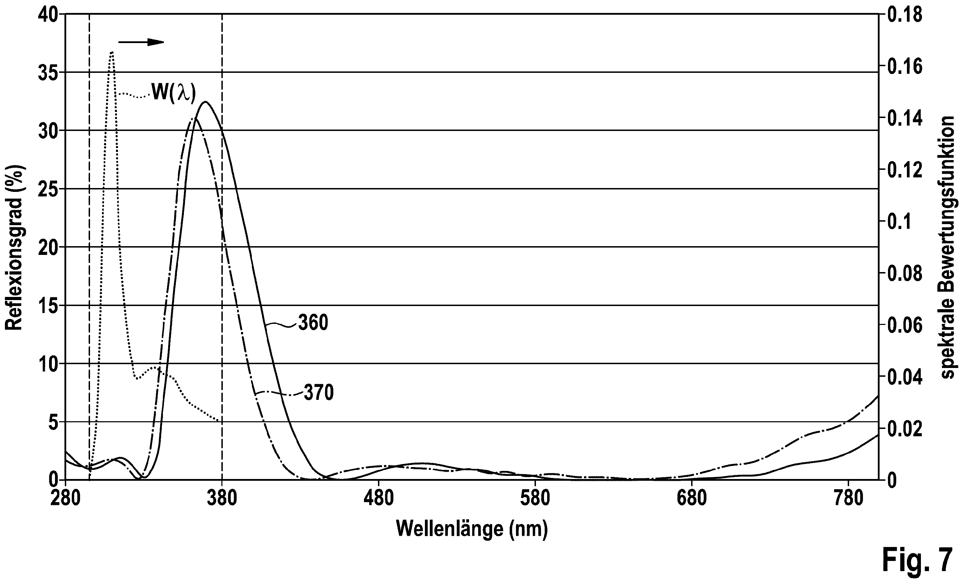

Der Reflexionsgrad für unterschiedliche Einfallswinkel auf die Rückseite der Brillengläser ist weitgehend unabhängig vom UV-Absorbergehalt im Grundmaterial und für die Einfallswinkel 0° (Kurve 360) und 35° (Kurve 370) in der Figur 7 dargestellt. Die Figur 7 zeigt des Weiteren zur Demonstration der Unterscheidung zwischen "nützlicher" und "gefährlicher" UV-Strahlung die Bewertungsfunktion W(λ) nach der Norm DIN EN ISO 13666:2013-10.

Um die nützliche Rückreflexion zu ermöglichen, liegt die Reflexion unter schrägem Winkel von 35° beim vorliegenden Anwendungsbeispiel für UV-Wellenlängen zwischen 355 nm und 390 nm bei über 20% (kann mit anderen Beispielen evtl. noch weiter erhöht werden). Bei einem UVundurchlässigen Substrat kann dadurch zumindest ein gewisser Anteil nützlichen UV-Lichts das Auge erreichen. Die gepunktete Kurve W(λ) zeigt an, welche Wellenlängen besonders schädlich sind. Diese müssen in der Reflexion weiterhin besonders effektiv unterdrückt werden. Die Reflexion liegt in diesem kritischen Bereich bei 0 bis 2%.

Das hier beschriebene Anwendungsbeispiel als rückseitige Antireflexbeschichtung für Variante 2 hat den Vorteil, dass der UV Schutz des Substratmaterials nicht beeinträchtigt wird, da der UV-Absorber weiterhin unverändert beigemischt wird.

Es sei darauf hingewiesen, dass bei Variante 2 über die von der Rückseite unabhängige Vorderseitenbeschichtung weitere Effekte erzielt werden können (i.e. IR-Spiegel).

## Patentansprüche

1. Brillenglas (1) mit einer objektseitigen Vorderfläche (4) und einer augenseitigen Rückfläche (6) umfassend ein Grundmaterial (2) mit einem von Null verschiedenen Massenanteil eines für unter einem Einfallswinkel (α) auf die Vorderfläche (4) einfallendes, das Brillenglas (1) transmittierendes und aus der Rückfläche (6) ausfallendes ultraviolettes Licht (5) eine Sperrfilterwirkung bewirkenden UV-Absorbers (3), **dadurch gekennzeichnet, dass**
- das Brillenglas ein klares Korrektionsglas ist;
- das Grundmaterial (2) Polyallyldiglycolcarbonat nicht umfasst, dass der Massenanteil des UV-Absorbers (3) im Grundmaterial (2) so groß ist, dass die durch einen Transmissionsgrad (T) von 2 % für unter einem Einfallswinkel (α) auf die Vorderfläche einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° zwischen 325 nm und 360 nm liegt und dass der Transmissionsgrad (T) für unter einem Einfallswinkel (α) auf die Vorderfläche (4) einfallendes, das Brillenglas (1) transmittierendes und aus der Rückfläche (6) ausfallendes Licht (5) der Wellenlänge 380 nm für jeden Einfallswinkel (α) zwischen 0° und 15° zwischen 25 % und 80 % beträgt; und dass das Brillenglas (1) eine für unter einem Einfallswinkel (α) auf die Vorderfläche (4) einfallendes Licht (5) eine entspiegelnde Wirkung bewirkende Beschichtung (7a, 7b) umfasst, welche derart ausgebildet ist, dass der Reflexionsgrad (R) für unter einem Einfallswinkel (α) auf die Vorderfläche (4) einfallendes Licht (5) im Wellenlängenbereich zwischen 355 nm und 390 nm und im Wellenlängenbereich zwischen 400 und 700 nm für jeden Einfallswinkel (α) zwischen 0° und 15° kleiner als 5 % ist;
und/oder dass
- das Brillenglas (1) eine für unter einem Einfallswinkel (α) auf die Rückfläche (6) einfallendes ultraviolettes Licht (5) eine entspiegelnde Wirkung bewirkende Beschichtung (7a, 7b) umfasst, welche derart ausgebildet ist, dass der Reflexionsgrad in einem Wellenlängenbereich zwischen 280 nm und einer zwischen 325 nm und 350 nm liegenden durch einen Reflexionsgrad von 5 % definierten Grenzwellenlänge für jeden Einfallswinkel zwischen 30° und 45 unterhalb von 5 % liegt und dass der Reflexionsgrad (R) für unter einem Einfallswinkel (α) auf die Rückfläche (6) einfallendes Licht (5) der Wellenlänge 380 nm für jeden Einfallswinkel (α) zwischen 30° und 45° größer als 8 % ist.

2. Brillenglas (1) mit einer objektseitigen Vorderfläche (4) und einer augenseitigen Rückfläche (6) umfassend ein Grundmaterial (2) mit einem Brechungsindex von mehr als 1,50, insbesondere mit einem Brechungsindex von mehr als 1,52, weiter insbesondere mit einem Brechungsindex von mehr als 1,55, vorzugsweise mit einem Brechungsindex von mehr als 1,6; und mit einem von Null verschiedenen Massenanteil eines für unter einem Einfallswinkel (α) auf die Vorderfläche (4) einfallendes, das Brillenglas (1) transmittierendes und aus der Rückfläche (6) ausfallendes ultraviolettes Licht (5) eine Sperrfilterwirkung bewirkenden UV-Absorbers (3), **dadurch gekennzeichnet, dass**
- das Brillenglas ein klares Korrektionsglas ist;
- der Massenanteil des UV-Absorbers (3) im Grundmaterial (2) so groß ist, dass die durch einen Transmissionsgrad (T) von 2 % für unter einem Einfallswinkel (α) auf die Vorderfläche einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° zwischen 325 nm und 360 nm liegt und dass der Transmissionsgrad (T) für unter einem Einfallswinkel (α) auf die Vorderfläche (4) einfallendes, das Brillenglas (1) transmittierendes und aus der Rückfläche (6) ausfallendes Licht (5) der Wellenlänge 380 nm für jeden Einfallswinkel (α) zwischen 0° und 15° zwischen 25 % und 80 % beträgt; und dass das Brillenglas (1) eine für unter einem Einfallswinkel (α) auf die Vorderfläche (4) einfallendes Licht (5) eine entspiegelnde Wirkung bewirkende Beschichtung (7a, 7b) umfasst, welche derart ausgebildet ist, dass der Reflexionsgrad (R) für unter einem Einfallswinkel (α) auf die Vorderfläche (4) einfallendes Licht (5) im Wellenlängenbereich zwischen 355 nm und 390 nm und im Wellenlängenbereich zwischen 400 und 700 nm für jeden Einfallswinkel (α) zwischen 0° und 15° kleiner als 5 % ist;
und/oder dass
- das Brillenglas (1) eine für unter einem Einfallswinkel (α) auf die Rückfläche (6) einfallendes ultraviolettes Licht (5) eine entspiegelnde Wirkung bewirkende Beschichtung (7a, 7b) umfasst, welche derart ausgebildet ist, dass der Reflexionsgrad in einem Wellenlängenbereich zwischen 280 nm und einer zwischen 325 nm und 350 nm liegenden durch einen Reflexionsgrad von 5 % definierten Grenzwellenlänge für jeden Einfallswinkel zwischen 30° und 45 unterhalb von 5 % liegt und dass der Reflexionsgrad (R) für unter einem Einfallswinkel (α) auf die Rückfläche (6) einfallendes Licht (5) der Wellenlänge 380 nm für jeden Einfallswinkel (α) zwischen 30° und 45° größer als 8 % ist.

3. Brillenglas (1) nach Anspruch 1 oder 2, **dadurch gekennzeichnet, dass**
- der Massenanteil des UV-Absorbers (3) im Grundmaterial (2) so groß ist, dass die durch einen Transmissionsgrad (T) von 2 % für unter einem Einfallswinkel (α) auf die Vorderfläche (4) einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° zwischen 325 nm und 350 nm oder zwischen 340 nm und 360 nm oder zwischen 340 nm und 350 nm liegt und/oder dass
- der Massenanteil des UV-Absorbers (3) im Grundmaterial (2) so groß ist, dass der Transmissionsgrad (T) für unter einem Einfallswinkel (α) auf die Vorderfläche (4) einfallendes, das Brillenglas (1) transmittierendes und aus der Rückfläche (6) ausfallendes Licht (5) der Wellenlänge 380 nm für jeden Einfallswinkel (α) zwischen 0° und 15° zwischen 25 % und 80 % ist und für alle Wellenlängen im Wellenlängenbereich zwischen 355 nm und 390 nm für jeden Einfallswinkel (α) zwischen 0° und 15° größer als 5 % ist und/oder dass
- die für unter einem Einfallswinkel (α) auf die Rückfläche (6) einfallendes ultraviolettes Licht (5) eine entspiegelnde Wirkung bewirkende Beschichtung (7a, 7b) derart ausgebildet ist, dass die durch einen Reflexionsgrad (R) von 5 % für unter einem Einfallswinkel (α) auf die Rückfläche (6) einfallendes Licht (5) definierte obere Grenzwellenlänge (λ_{UV cut-off}) der entspiegelnden Wirkung für ultraviolettes Licht (5) für jeden Einfallswinkel (α) zwischen 30° und 45° zwischen 325 nm und 350 nm oder zwischen 325 nm und 340 nm liegt und/oder dass
- die für unter einem Einfallswinkel (α) auf die Rückfläche (6) einfallendes ultraviolettes Licht (5) eine entspiegelnde Wirkung bewirkende Beschichtung (7a, 7b) derart ausgebildet ist, dass der Reflexionsgrad (R) für unter einem Einfallswinkel (α) auf die Rückfläche (6) einfallendes Licht (5) der Wellenlänge 380 nm für jeden Einfallswinkel (α) zwischen 30° und 45° größer als 8 % ist und für alle Wellenlängen im Wellenlängenbereich zwischen 355 nm und 390 nm für jeden Einfallswinkel (α) zwischen 30° und 45° größer als 6 % ist.

4. Brillenglas (1) nach einem der vorangegangenen Ansprüche, **dadurch gekennzeichnet, dass** der Massenanteil des UV-Absorbers (3) im Grundmaterial (2) so groß ist, dass die durch einen Transmissionsgrad (T) von 2 % für unter einem Einfallswinkel (α) auf die Vorderfläche (4) einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° entweder zwischen 325 nm und 360 nm oder zwischen 325 nm und 350 nm oder zwischen 325 nm und 340 nm liegt und dass der Transmissionsgrad (T) für unter einem Einfallswinkel (α) auf die Vorderfläche (4) einfallendes, das Brillenglas (1) transmittierendes und aus der Rückfläche (6) ausfallendes Licht (5) der Wellenlänge 380 nm für jeden Einfallswinkel zwischen 0° und 15° zwischen 25 % und 80 % beträgt.

5. Brillenglas (1) nach einem der vorangegangenen Ansprüche, **dadurch gekennzeichnet, dass** die Beschichtung (7a, 7b) derart ausgebildet ist, dass der Reflexionsgrad (R) für einen unter einem Einfallswinkel (α) auf die Vorderfläche (4) einfallendes Licht (5) für jede Wellenlänge zwischen 380 nm und 780 nm oder zwischen 400 nm und 700 nm und für jeden Einfallswinkel (α) zwischen 0° und 15° kleiner als 5 % ist.

6. Brillenglas (1) nach einem der Ansprüche 3 bis 5, **dadurch gekennzeichnet, dass** der Massenanteil des UV-Absorbers (3) im Grundmaterial (2) so groß ist, dass die durch einen Transmissionsgrad (T) von 2 % für unter einem Einfallswinkel (α) auf die Vorderfläche (4) einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° zwischen 325 nm und 350 nm liegt und dass die Beschichtung (7a, 7b) für unter einem Einfallswinkel (α) auf die Rückfläche (6) einfallendes ultraviolettes Licht (5) eine reflektierende Wirkung bewirkt, welche derart ausgebildet ist, dass der Reflexionsgrad (R) für unter einem Einfallswinkel (α) auf die Rückfläche (6) einfallendes ultraviolettes Licht (5) im Wellenlängenbereich zwischen 280 nm und 335 nm für jeden Einfallswinkel (α) zwischen 30° und 45° größer als 2 % ist.

7. Brillenglas (1) nach einem der Ansprüche 1 bis 3, **dadurch gekennzeichnet, dass** der Massenanteil des UV-Absorbers (3) im Grundmaterial (2) so groß ist, dass die durch einen Transmissionsgrad (T) von 2 % für unter einem Einfallswinkel (α) auf die Vorderfläche (4) einfallendes, das Brillenglas (1) transmittierendes und aus der Rückfläche (6) ausfallendes Licht (5) definierte obere Grenzwellenlänge (λ_{UV cut-off}) der Sperrfilterwirkung für jeden Einfallswinkel (α) zwischen 0° und 15° zwischen 325 nm und 350 nm liegt und dass der Transmissionsgrad (T) für unter einem Einfallswinkel (α) auf die Vorderfläche (4) einfallendes, das Brillenglas (1) transmittierendes und aus der Rückfläche (6) ausfallendes Licht (5) der Wellenlänge 380 nm für jeden Einfallswinkel (α) zwischen 0° und 15° kleiner als 50 % ist und dass das Brillenglas eine für unter einem Einfallswinkel (α) auf die Rückfläche (6) einfallendes ultraviolettes Licht (5) eine entspiegelnde Wirkung bewirkende Beschichtung (7a, 7b) umfasst, welche derart ausgebildet ist, dass die durch einen Reflexionsgrad von 5 % für unter einem Einfallswinkel (α) auf die Rückfläche (6) einfallendes Licht (5) definierte obere Grenzwellenlänge (λ_{UV cut-off}) der entspiegelnden Wirkung für ultraviolettes Licht (5) für jeden Einfallswinkel (α) zwischen 30° und 45° zwischen 325 nm und 350 nm liegt und dass der Reflexionsgrad (R) für unter einem Einfallswinkel (α) auf die Rückfläche einfallendes Licht (5) der Wellenlänge 380 nm für jeden Einfallswinkel zwischen 30° und 45° größer als 8 % ist.

8. Brillenglas (1) nach Anspruch 7, **dadurch gekennzeichnet, dass** die Beschichtung (7a, 7b) derart ausgebildet ist, dass der Reflexionsgrad (R) für unter einem Einfallswinkel (α) auf die Rückfläche (6) einfallendes Licht (5) für jede Wellenlänge im Wellenlängenbereich zwischen 355 nm und 390 nm für jeden Einfallswinkel (α) zwischen 30° und 45° größer als 5 % ist.

9. Brillenglas (1) nach einem der Ansprüche 7 oder 8, **dadurch gekennzeichnet, dass** die Beschichtung (7a, 7b) derart ausgebildet ist, dass der Reflexionsgrad (R) für unter einem Einfallswinkel (α) auf die Vorderfläche (4) einfallendes Licht (5) im Wellenlängenbereich zwischen 380 nm und 780 nm für jeden Einfallswinkel (α) zwischen 0° und 15° kleiner als 5 % ist.

10. Brillenglas (1) nach einem der Ansprüche 7 bis 9, **dadurch gekennzeichnet, dass** die Beschichtung (7a, 7b) derart ausgebildet ist, dass der Reflexionsgrad (R) für unter einem Einfallswinkel (α) auf die Rückfläche (6) einfallendes Licht im Wellenlängenbereich zwischen 280 nm und 325 nm für jeden Einfallswinkel (α) zwischen 30° und 45° kleiner als 5 % ist.

11. Brillenglas (1) nach einem der vorangegangenen Ansprüche, **dadurch gekennzeichnet, dass** die Beschichtung (7a, 7b) vorderflächenseitig und/oder rückflächenseitig und/oder in das Grundmaterial (2) mit dem UV-Absorber (3) eingebettet ist.

12. Computerimplementiertes Verfahren zum Berechnen eines als klares Korrektionsglas ausgebildeten Brillenglases (1) mit einer objektseitigen Vorderfläche (4) und einer augenseitigen Rückfläche (6) umfassend ein Grundmaterial (2) mit einem von Null verschiedenen Massenanteil eines für unter einem Einfallswinkel (α) auf die Vorderfläche (4) einfallendes, das Brillenglas (1) transmittierendes und aus der Rückfläche (6) ausfallendes ultraviolettes Licht (5) eine Sperrfilterwirkung bewirkenden UV-Absorbers (3), **gekennzeichnet durch** die Schritte:
a) Bereitstellen von das Grundmaterial (2) mit dem UV-Absorber (3) repräsentierenden Daten
b) Bereitstellen von die Geometrie der Vorderfläche (4) und/oder die Geometrie der Rückfläche (6) des Brillenglases (1) repräsentierenden Daten
c) Bereitstellen von eine Beschichtung (7a, 7b) mit einer oder mehreren Schichten repräsentierenden Daten
d) Berechnen des Reflexionsgrads (R) für unter verschiedenen Einfallswinkeln (α) auf die Rückfläche (6) des Brillenglases (1) einfallenden Lichts (5) unterschiedlicher Wellenlänge unter Variation der in dem Schritt c) bereitgestellten Daten bis der Reflexionsgrad (R) in einem Wellenlängenbereich zwischen 280 nm und einer zwischen 325 nm und 350 nm liegenden durch einen Reflexionsgrad (R) von 5 % definierten Grenzwellenlänge für jeden Einfallswinkel (α) zwischen 30° und 45 unterhalb von 5 % liegt und der Reflexionsgrad (R) für unter einem Einfallswinkel (α) auf die Rückfläche (6) einfallendes Licht (5) einer Wellenlänge in einem Wellenlängenbereich zwischen 355 nm und 390 nm für jeden Einfallswinkel (α) zwischen 30° und 45° größer als 8 % ist,
e) Ausgeben der die Beschichtung (7a, 7b) repräsentierenden Daten für die die in Schritt d) definierten Bedingungen für den Reflexionsgrad (R) erfüllt sind.

13. Verfahren nach Anspruch 12, **dadurch gekennzeichnet, dass** die Beschichtung (7a, 7b) mehrere dielektrische Schichten umfasst und dass die die Beschichtung (7a, 7b) repräsentierenden Daten die Brechungsindices und die Dicken der dielektrischen Schichten umfasst.

14. Verfahren zum Herstellen eines Brillenglases (1) basierend auf den in Schritt e) nach Anspruch 12 oder 13 ausgegebenen Daten.

15. Computerprogramm mit Programmcode zur Durchführung aller Verfahrensschritte nach einem der Ansprüche 12 bis 14, wenn das Computerprogramm in einem Computer geladen und/oder in einem Computer ausgeführt wird.

## Claims

1. Spectacle lens (1) with an object-side front surface (4) and an eye-side back surface (6), comprising a base material (2) with a mass fraction that differs from zero of a UV absorber (3) that brings about a band-stop filter effect for ultraviolet light (5) that is incident on the front surface (4) at an angle (α) of incidence, transmitted through the spectacle lens (1) and emergent from the back surface (6), **characterized in that**
- the spectacle lens is a clear correction lens;
- the base material (2) does not comprise poly allyl diglycol carbonate, **in that** the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface at an angle (α) of incidence, transmitted through the spectacle lens (1) and emergent from the back surface (6) is between 325 nm and 360 nm for every angle (α) of incidence between 0° and 15°, and **in that** the transmittance (T) for light (5) having the wavelength of 380 nm that is incident on the front surface (4) at an angle (α) of incidence, is transmitted through the spectacle lens (1) and emergent from the back surface (6) is between 25% and 80% for every angle (α) of incidence between 0° and 15° and **in that** the spectacle lens (1) comprises a coating (7a, 7b) that brings about an antireflective effect for light (5) incident on the front surface (4) at an angle (α) of incidence, said coating being configured in such a way that the reflectance (R) for light (5) incident on the front surface (4) at an angle (α) of incidence in the wavelength range between 355 nm and 390 nm and in the wavelength range between 400 and 700 nm is less than 5% for every angle (α) of incidence between 0° and 15°;
and/or **in that**
- the spectacle lens (1) comprises a coating (7a, 7b) that brings about an antireflective effect for ultraviolet light (5) that is incident on the back surface (6) at an angle (α) of incidence, said coating being configured in such a way that the reflectance in a wavelength range between 280 nm and a cut-off wavelength that is between 325 nm and 350 nm and is defined by a reflectance of 5% is below 5% for every angle of incidence between 30° and 45°, and **in that** the reflectance (R) for light (5) having the wavelength of 380 nm that is incident on the back surface (6) at an angle (α) of incidence is greater than 8% for every angle (α) of incidence between 30° and 45°.

2. Spectacle lens (1) with an object-side front surface (4) and an eye-side back surface (6), comprising a base material (2) with a refractive index of more than 1.50, in particular with a refractive index of more than 1.52, more particularly with a refractive index of more than 1.55, preferably with a refractive index of more than 1.6; and with a mass fraction that differs from zero of a UV absorber (3) that brings about a band-stop filter effect for ultraviolet light (5) that is incident on the front surface (4) at an angle (α) of incidence, transmitted through the spectacle lens (1) and emergent from the back surface (6), **characterized in that**
- the spectacle lens is a clear correction lens;
- the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface at an angle (α) of incidence, transmitted through the spectacle lens (1) and emergent from the back surface (6) is between 325 nm and 360 nm for every angle (α) of incidence between 0° and 15°, and **in that** the transmittance (T) for light (5) having the wavelength of 380 nm that is incident on the front surface (4) at an angle (α) of incidence, is transmitted through the spectacle lens (1) and emergent from the back surface (6) is between 25% and 80% for every angle (α) of incidence between 0° and 15°, and **in that** the spectacle lens (1) comprises a coating (7a, 7b) that brings about an antireflective effect for light (5) incident on the front surface (4) at an angle (α) of incidence, said coating being configured in such a way that the reflectance (R) for light (5) incident on the front surface (4) at an angle (α) of incidence in the wavelength range between 355 nm and 390 nm and in the wavelength range between 400 and 700 nm is less than 5% for every angle (α) of incidence between 0° and 15°;
and/or **in that**
- the spectacle lens (1) comprises a coating (7a, 7b) that brings about an antireflective effect for ultraviolet light (5) that is incident on the back surface (6) at an angle (α) of incidence, said coating being configured in such a way that the reflectance in a wavelength range between 280 nm and a cut-off wavelength that is between 325 nm and 350 nm and is defined by a reflectance of 5% is below 5% for every angle of incidence between 30° and 45°, and **in that** the reflectance (R) for light (5) having the wavelength of 380 nm that is incident on the back surface (6) at an angle (α) of incidence is greater than 8% for every angle (α) of incidence between 30° and 45°.

3. Spectacle lens (1) according to Claim 1 or 2, **characterized in that**
- the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface (4) at an angle (α) of incidence, transmitted through the spectacle lens (1) and emergent from the back surface (6) is between 325 nm and 350 nm or between 340 nm and 360 nm or between 340 nm and 350 nm for every angle (α) of incidence between 0° and 15°, and/or **in that**
- the mass fraction of the UV absorber (3) in the base material (2) is of a magnitude such that the transmittance (T) for light (5) having the wavelength of 380 nm that is incident on the front surface (4) at an angle (α) of incidence, is transmitted through the spectacle lens (1) and emergent from the back surface (6) is between 25% and 80% for every angle (α) of incidence between 0° and 15°, and for all wavelengths in the wavelength range between 355 nm and 390 nm is greater than 5% for every angle (α) of incidence between 0° and 15°, and/or **in that**
- the coating (7a, 7b) that brings about an antireflective effect for ultraviolet light (5) that is incident on the back surface (6) at an angle (α) of incidence is configured in such a way that the upper cut-off wavelength (λ_{UV cut-off}) of the antireflective effect for ultraviolet light (5) defined by a reflectance (R) of 5% for light (5) that is incident on the back surface (6) at an angle (α) of incidence is between 325 nm and 350 nm or between 325 nm and 340 nm for every angle (α) of incidence between 30° and 45°, and/or **in that**
- the coating (7a, 7b) that brings about an antireflective effect for ultraviolet light (5) that is incident on the back surface (6) at an angle (α) of incidence is configured in such a way that the reflectance (R) for light (5) having the wavelength of 380 nm that is incident on the back surface (6) at an angle (α) of incidence is greater than 8% for every angle (α) of incidence between 30° and 45° and for all wavelengths in the wavelength range between 355 nm and 390 nm is greater than 6% for every angle (α) of incidence between 30° and 45°.

4. Spectacle lens (1) according to any of the preceding claims, **characterized in that** the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface (4) at an angle (α) of incidence, transmitted through the spectacle lens (1) and emergent from the back surface (6) is either between 325 nm and 360 nm or between 325 nm and 350 nm or between 325 nm and 340 nm for every angle (α) of incidence between 0° and 15°, and **in that** the transmittance (T) for light (5) having the wavelength of 380 nm that is incident on the front surface (4) at an angle (α) of incidence, is transmitted through the spectacle lens (1) and emergent from the back surface (6) is between 25% and 80% for every angle (α) of incidence between 0° and 15°.

5. Spectacle lens (1) according to any of the preceding claims, **characterized in that** the coating (7a, 7b) is configured in such a way that the reflectance (R) for light (5) that is incident on the front surface (4) at an angle (α) of incidence is less than 5% for every wavelength between 380 nm and 780 nm or between 400 nm and 700 nm and for every angle (α) of incidence between 0° and 15°.

6. Spectacle lens (1) according to any of Claims 3 to 5, **characterized in that** the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface (4) at an angle (α) of incidence, transmitted through the spectacle lens (1) and emergent from the back surface (6) is between 325 nm and 350 nm for every angle (α) of incidence between 0° and 15°, and **in that** the coating (7a, 7b), for ultraviolet light (5) that is incident on the back surface (6) at an angle (α) of incidence, brings about a reflective effect which is configured in such a way that the reflectance (R) for ultraviolet light (5) in the wavelength range between 280 nm and 335 nm that is incident on the back surface (6) at an angle (α) of incidence is greater than 2% for every angle (α) of incidence between 30° and 45°.

7. Spectacle lens (1) according to any of Claims 1 to 3, **characterized in that** the mass fraction of the UV absorber (3) in the base material (2) is of a magnitude such that the upper cut-off wavelength (λ_{UV cut-off}) of the band-stop filter effect defined by a transmittance (T) of 2% for light (5) that is incident on the front surface (4) at an angle (α) of incidence, transmitted through the spectacle lens (1) and emergent from the back surface (6) is between 325 nm and 350 nm for every angle (α) of incidence between 0° and 15°, and **in that** the transmittance (T) for light (5) having the wavelength of 380 nm that is incident on the front surface (4) at an angle (α) of incidence, is transmitted through the spectacle lens (1) and emergent from the back surface (6) is less than 50% for every angle (α) of incidence between 0° and 15°, and **in that** the spectacle lens comprises a coating (7a, 7b) that brings about an antireflective effect for ultraviolet light (5) that is incident on the back surface (6) at an angle (α) of incidence, said coating being configured in such a way that the upper cut-off wavelength (λ_{UV cut-off} ) of the antireflective effect for ultraviolet light (5) defined by a reflectance of 5% for light (5) that is incident on the back surface (6) at an angle (α) of incidence is between 325 nm and 350 nm for every angle (α) of incidence between 30° and 45°, and **in that** the reflectance (R) for light (5) having the wavelength of 380 nm that is incident on the back surface at an angle (α) of incidence is greater than 8% for every angle of incidence between 30° and 45°.

8. Spectacle lens (1) according to Claim 7, **characterized in that** the coating (7a, 7b) is configured in such a way that the reflectance (R) for light (5) that is incident on the back surface (6) at an angle (α) of incidence for every wavelength in the wavelength range between 355 nm and 390 nm is greater than 5% for every angle (α) of incidence between 30° and 45°.

9. Spectacle lens (1) according to either of Claims 7 and 8, **characterized in that** the coating (7a, 7b) is configured in such a way that the reflectance (R) for light (5) that is incident on the front surface (4) at an angle (α) of incidence in the wavelength range between 380 nm and 780 nm is less than 5% for every angle (α) of incidence between 0° and 15°.

10. Spectacle lens (1) according to any of Claims 7 to 9, **characterized in that** the coating (7a, 7b) is configured in such a way that the reflectance (R) for light that is incident on the back surface (6) at an angle (α) of incidence in the wavelength range between 280 nm and 325 nm is less than 5% for every angle (α) of incidence between 30° and 45°.

11. Spectacle lens (1) according to any of the preceding claims, **characterized in that** the coating (7a, 7b) is embedded on the front surface side and/or on the back surface side and/or into the base material (2) with the UV absorber (3).

12. Computer-implemented method for calculating a spectacle lens (1) configured as a clear correction lens with an object-side front surface (4) and an eye-side back surface (6), comprising a base material (2) with a mass fraction that differs from zero of a UV absorber (3) that brings about a band-stop filter effect for ultraviolet light (5) that is incident on the front surface (4) at an angle (α) of incidence, transmitted through the spectacle lens (1) and emergent from the back surface (6), **characterized by** the following steps:
a) providing data representing the base material (2) with the UV absorber (3)
b) providing data representing the geometry of the front surface (4) and/or the geometry of the back surface (6) of the spectacle lens (1)
c) providing data representing a coating (7a, 7b) having one or a plurality of layers
d) calculating the reflectance (R) for light (5) of varying wavelength that is incident on the back surface (6) of the spectacle lens (1) at various angles (α) of incidence with variation of the data provided in step c) until the reflectance (R) in a wavelength range between 280 nm and a cut-off wavelength that is between 325 nm and 350 nm and is defined by a reflectance (R) of 5% is below 5% for every angle (α) of incidence between 30° and 45° and the reflectance (R) for light (5) having a wavelength in a wavelength range between 355 nm and 390 nm that is incident on the back surface (6) at an angle (α) of incidence is greater than 8% for every angle (α) of incidence between 30° and 45°,
e) outputting the data representing the coating (7a, 7b) for which the conditions for the reflectance (R) as defined in step d) are met.

13. Method according to Claim 12, **characterized in that** the coating (7a, 7b) comprises a plurality of dielectric layers, and **in that** the data representing the coating (7a, 7b) comprise the refractive indices and the thicknesses of the dielectric layers.

14. Method for producing a spectacle lens (1) on the basis of the data output in step e) according to Claim 12 or 13.

15. Computer program having program code for carrying out all method steps according to any of Claims 12 to 14 when the computer program is loaded in a computer and/or executed in a computer.

## Revendications

1. Verre de lunettes (1) pourvu d'une surface avant (4) côté objet et d'une surface arrière côté œil (6), ledit verre de lunettes comprenant un matériau de base (2) ayant une proportion massique non nulle d'absorbeur d'UV (3) ayant un effet de filtre bloquant pour une lumière ultraviolette (5) incidente à la surface avant (4) avec un angle d'incidence (α), passant à travers le verre de lunettes (1) et sortant par la surface arrière (6), **caractérisé en ce que**
- le verre de lunettes est un verre de correction clair ;
- le matériau de base (2) ne comprend pas de polyallyldiglycolcarbonate, **en ce que** la proportion massique d'absorbeur d'UV (3) dans le matériau de base (2) est telle que la longueur d'onde limite supérieure (λ_{UV coupure}) de l'effet de filtre bloquant, laquelle est définie par un degré de transmission (T) de 2% pour la lumière (5) incidente à la surface avant avec un angle d'incidence (α), passant à travers le verre de lunettes (1) et sortant par la surface arrière (6), est comprise entre 325 nm et 360 nm pour chaque angle d'incidence (α) compris entre 0° et 15°, et **en ce que** le taux (T) de transmission d'une lumière (5) de longueur d'onde de 380 nm, incidente à la surface avant (4) avec un angle d'incidence (α), passant à travers le verre de lunettes (1) et sortant par la surface arrière (6), est compris entre 25 % et 80 % pour chaque angle d'incidence (α) compris entre 0° et 15° ; et **en ce que** le verre de lunettes (1) comprend un revêtement (7a, 7b) qui a un effet antireflet pour une lumière (5) incidente à la surface avant (4) avec un angle d'incidence (α) et qui est conçu de telle sorte que le degré (R) de réflexion de la lumière (5) incidente à la surface avant (4) avec un angle d'incidence (α) est inférieur à 5 % dans la gamme de longueurs d'onde comprise entre 355 nm et 390 nm et dans la gamme de longueurs d'onde comprise entre 400 et 700 nm pour chaque angle d'incidence (α) compris entre 0° et 15° ;
et/ou **en ce que**
- le verre de lunettes (1) comprend un revêtement (7a, 7b) qui a un effet antireflet pour une lumière ultraviolette (5) incidente à la surface arrière (6) avec un angle d'incidence (α) et qui est conçu de telle sorte que le degré de réflexion est inférieur à 5 % dans une gamme de longueurs d'onde comprise entre 280 nm et une longueur d'onde limite, située entre 325 nm et 350 nm et définie par un degré de réflexion de 5 %, pour chaque angle d'incidence compris entre 30° et 45° et **en ce que** le degré (R) de réflexion d'une lumière (5) de longueur d'onde 380 nm, incidente à la surface arrière (6) avec un angle d'incidence (α), est supérieur à 8 % pour chaque angle d'incidence (α) compris entre 30° et 45°.

2. Verre de lunettes (1) pourvu d'une surface avant côté objet (4) et d'une surface arrière côté œil (6), ledit verre de lunettes comprenant un matériau de base (2) ayant un indice de réfraction supérieur à 1,50, en particulier un indice de réfraction supérieur à 1,52, en particulier un indice de réfraction supérieur à 1,55, de préférence un indice de réfraction supérieur à 1,6 ; et une proportion massique non nulle d'absorbeur d'UV (3) ayant un effet de filtre bloquant pour une lumière ultraviolette (5) incidente à la surface avant (4) avec un angle d'incidence (α), passant à travers le verre de lunettes (1) et sortant par la surface arrière (6), **caractérisé en ce que**
- le verre de lunettes est un verre de correction clair ;
- la proportion massique d'absorbeur d'UV (3) dans le matériau de base (2) est telle que la longueur d'onde limite supérieure (λ_{UV} coupure) de l'effet de filtre bloquant, laquelle est définie par un taux de transmission (T) de 2 % pour la lumière (5) incidente à la surface avant avec un angle d'incidence
(α), passant à travers le verre de lunettes (1) et sortant par la surface arrière (6), est comprise entre 325 nm et 360 nm pour chaque angle d'incidence (α) compris entre 0° et 15°, et **en ce que** le taux (T) de transmission d'une lumière (5) de longueur d'onde de 380 nm, incidente à la surface avant (4) avec un angle d'incidence (α), passant à travers le verre de lunettes (1) et sortant par la surface arrière (6), est compris entre 25 % et 80 % pour chaque angle d'incidence (α) compris entre 0° et 15° ; et **en ce que** le verre de lunettes (1) comprend un revêtement (7a, 7b) qui a un effet antireflet pour une lumière (5) incidente à la surface avant (4) avec un angle d'incidence (α) et qui est conçu de telle sorte que le degré (R) de réflexion de la lumière (5) incidente à la surface avant (4) avec un angle d'incidence (α) est inférieur à 5 % dans la gamme de longueurs d'onde comprise entre 355 nm et 390 nm et dans la gamme de longueurs d'onde comprise entre 400 et 700 nm pour chaque angle d'incidence (α) compris entre 0° et 15° ;
et/ou **en ce que**
- le verre de lunettes (1) comprend un revêtement (7a, 7b) qui a un effet antireflet pour une lumière ultraviolette (5) incidente à la surface arrière (6) avec un angle d'incidence (α) et qui est conçu de telle sorte que le degré de réflexion est inférieur à 5 % dans une gamme de longueurs d'onde comprise entre 280 nm et une longueur d'onde limite, située entre 325 nm et 350 nm et définie par un degré de réflexion de 5 %, pour chaque angle d'incidence compris entre 30° et 45° et **en ce que** le degré (R) de réflexion d'une lumière (5) de longueur d'onde de 380 nm, incidente à la surface arrière (6) avec un angle d'incidence (α), est supérieur à 8 % pour chaque angle d'incidence (α) compris entre 30° et 45°.

3. Verre de lunettes (1) selon la revendication 1 ou 2, **caractérisé en ce que**
- la proportion massique d'absorbeur d'UV (3) dans le matériau de base (2) est telle que la longueur d'onde limite supérieure (λ_{UV} coupure) de l'effet de filtre bloquant, laquelle est définie par un taux de transmission (T) de 2 % pour la lumière (5) incidente à la surface avant (4) avec un angle d'incidence (α), passant à travers le verre de lunettes (1) et sortant par la surface arrière (6), est comprise entre 325 nm et 350 nm ou entre 340 nm et 360 nm ou entre 340 nm et 350 nm pour chaque angle d'incidence (α) compris entre 0° et 15° et/ou
- la proportion massique d'absorbeur d'UV (3) dans le matériau de base (2) est telle que le taux (T) de transmission d'une lumière (5) de longueur d'onde de 380 nm, incidente à la surface avant (4) avec un angle d'incidence (α), passant à travers le verre de lunettes (1) et sortant par la surface arrière (6), est compris entre 25 % et 80 % pour chaque angle d'incidence (α) compris entre 0° et 15° et est supérieur à 5 % pour toutes les longueurs d'onde dans la gamme de longueurs d'onde comprise entre 355 nm et 390 nm pour chaque angle d'incidence (α) compris entre 0° et 15° et/ou
- le revêtement (7a, 7b) qui a un effet antireflet pour une lumière ultraviolette (5) incidente à la surface arrière (6) avec un angle d'incidence (α) est conçu de telle sorte que la longueur d'onde limite supérieure (l_{UV coupure}) de l'effet de filtre antireflet pour une lumière ultraviolette (5), laquelle est définie par un degré de réflexion (R) de 5 % pour la lumière (5) incidente à la surface arrière (6) avec un angle d'incidence (α), est comprise entre 325 nm et 350 nm ou entre 325 nm et 340 nm pour chaque angle d'incidence (α) compris entre 30° et 45° et/ou **en ce que**
- le revêtement (7a, 7b) qui a un effet antireflet pour une lumière (5) incidente à la surface arrière (6) avec un angle d'incidence (α) est conçu de telle sorte que le degré (R) de réflexion de la lumière (5) de longueur d'onde de 380 nm, incidente à la surface arrière (6) avec un angle d'incidence (α), est supérieur à 8 % pour chaque angle d'incidence (α) compris entre 30° et 45° et est supérieur à 6 % pour toutes les longueurs d'onde dans la gamme de longueurs d'onde comprise entre 355 nm et 390 nm pour chaque angle d'incidence (α) compris entre 30° et 45°.

4. Verre de lunettes (1) selon l'une des revendications précédentes, **caractérisé en ce que** la proportion massique d'absorbeur d'UV (3) dans le matériau de base (2) est telle que la longueur d'onde limite supérieure (λ_{UV} coupure) de l'effet de filtre bloquant, laquelle est définie par un taux de transmission (T) de 2 % pour la lumière (5) incidente à la surface avant (4) avec un angle d'incidence (α), passant à travers le verre de lunettes (1) et sortant par la surface arrière (6), est comprise entre 325 nm et 360 nm ou entre 325 nm et 350 nm ou entre 325 nm et 340 nm pour chaque angle d'incidence (α) compris entre 0° et 15° et **en ce que** le taux (T) de transmission d'une lumière (5) de longueur d'onde de 380 nm, incidente à la surface avant (4) avec un angle d'incidence (α), passant à travers le verre de lunettes (1) et sortant par la surface arrière (6), est compris entre 25 % et 80 % pour chaque angle d'incidence compris entre 0° et 15°.

5. Verre de lunettes (1) selon l'une des revendications précédentes, **caractérisé en ce que** le revêtement (7a, 7b) est conçu de telle sorte que le degré (R) de réflexion de la lumière (5) incidente à la surface avant (4) avec un angle d'incidence (α) est inférieur à 5 % pour chaque longueur d'onde comprise entre 380 nm et 780 nm ou entre 400 nm et 700 nm et pour chaque angle d'incidence (α) compris entre 0° et 15°.

6. Verre de lunettes (1) selon l'une des revendications 3 à 5, **caractérisé en ce que** la proportion massique d'absorbeur UV (3) dans le matériau de base (2) est telle que la longueur d'onde limite supérieure (λ_{UV} coupure) de l'effet de filtre bloquant, laquelle est définie par un taux de transmission (T) de 2 % pour la lumière (5) incidente à la surface avant (4) avec un angle d'incidence (α), passant à travers le verre de lunettes (1) et sortant par la surface arrière (6), est comprise entre 325 nm et 350 nm pour chaque angle d'incidence (α) compris entre 0° et 15°, et **en ce que** le revêtement (7a, 7b) qui a un effet antireflet pour une lumière (5) incidente à la surface arrière (6) avec un angle d'incidence (α) est conçu de telle sorte que le degré (R) de réflexion de la lumière ultraviolette (5), incidente à la surface arrière (6) avec un angle d'incidence (α), est supérieur à 2 % dans la gamme de longueurs d'onde comprise entre 280 nm et 335 nm pour chaque angle d'incidence (α) compris entre 30° et 45°.

7. Verre de lunettes (1) selon l'une des revendications 1 à 3, **caractérisé en ce que** la proportion massique d'absorbeur d'UV (3) dans le matériau de base (2) est telle que la longueur d'onde limite supérieure (λ_{UV} coupure) de l'effet de filtre bloquant, laquelle est définie par un taux de transmission (T) de 2 % pour la lumière (5) incidente à la surface avant (4) avec un angle d'incidence (α), passant à travers le verre de lunettes (1) et sortant par la surface arrière (6), est comprise entre 325 nm et 350 nm pour chaque angle d'incidence (α) compris entre 0° et 15°, et **en ce que** le taux (T) de transmission d'une lumière (5) de longueur d'onde de 380 nm, incidente à la surface avant (4) avec un angle d'incidence (α), passant à travers le verre de lunettes (1) et sortant par la surface arrière (6), est inférieur à 50 % pour chaque angle d'incidence (α) compris entre 0° et 15° et **en ce que** le verre de lunettes comprend un revêtement (7a, 7b) qui a un effet antireflet pour une lumière ultraviolette (5) incidente à la surface arrière (6) avec un angle d'incidence (α) et qui est conçu de telle sorte que la longueur d'onde limite supérieure (λ_{UV} coupure) de l'effet de filtre bloquant pour la lumière ultraviolette (5), laquelle est définie par un degré de réflexion de 5 % pour la lumière (5) incidente à la surface arrière (6) avec un angle d'incidence (α), est comprise entre 325 nm et 350 nm pour chaque angle d'incidence (α) compris entre 30° et 45° et **en ce que** le degré (R) de réflexion de la lumière (5) de longueur d'onde de 380 nm, incidente à la surface arrière avec un angle d'incidence (α), est supérieur à 8 % pour chaque angle d'incidence (α) compris entre 30° et 45°.

8. Verre de lunettes (1) selon la revendication 7, **caractérisé en ce que** le revêtement (7a, 7b) est conçu de telle sorte que le degré (R) de réflexion de lumière (5), incidente à la surface arrière (6) avec un angle d'incidence (α), est supérieur à 5% pour chaque longueur d'onde dans la gamme de longueurs d'onde comprise entre 355 nm et 390 nm pour chaque angle d'incidence (α) compris entre 30° et 45°.

9. Verre de lunettes (1) selon l'une des revendications 7 ou 8, **caractérisé en ce que** le revêtement (7a, 7b) est conçu de telle sorte que le degré (R) de réflexion de lumière (5), incidente à la surface avant (4) avec un angle d'incidence (α), est inférieur à 5% dans la gamme de longueurs d'onde comprise entre 380 nm et 780 nm pour chaque angle d'incidence (α) compris entre 0° et 15°.

10. Verre de lunettes (1) selon l'une des revendications 7 à 9, **caractérisé en ce que** le revêtement (7a, 7b) est conçu de telle sorte que le degré (R) de réflexion de lumière, incidente à la surface arrière (6) avec un angle d'incidence (α), est inférieur à 5% dans la gamme de longueurs d'onde comprise entre 280 nm et 325 nm pour chaque angle d'incidence (α) compris entre 30° et 45°.

11. Verre de lunettes (1) selon l'une des revendications précédentes, **caractérisé en ce que** le revêtement (7a, 7b) est noyé côté surface avant et/ou côté surface arrière et/ou dans le matériau de base (2) contenant l'absorbeur d'UV (3).

12. Procédé mis en œuvre par ordinateur pour calculer un verre de lunettes (1) conçu comme un verre de correction clair et pourvu d'une surface avant côté objet (4) et d'une surface arrière côté œil (6), le verre de lunettes comprenant un matériau de base (2) ayant une proportion massique non nulle d'absorbeur d'UV (3) ayant un effet de filtre bloquant pour une lumière ultraviolette (5) incidente à la surface avant (4) avec un angle d'incidence (α), passant à travers le verre de lunettes (1) et sortant par la surface arrière (6), le procédé étant **caractérisé par** les étapes suivantes :
a) fournir des données représentant le matériau de base (2) contenant l'absorbeur d'UV (3),
b) fournir des données représentant la géométrie de la surface avant (4) et/ou la géométrie de la surface arrière (6) du verre de lunettes (1),
c) fournir des données représentant un revêtement (7a, 7b) qui comporte au moins une couche,
d) calcul du degré (R) de réflexion d'une lumière (5) de différentes longueurs d'onde, incidente à la surface arrière (6) du verre de lunettes (1) avec différents angles d'incidence (α), par variation des données fournies à l'étape c) jusqu'à ce que le degré de réflexion (R) se trouve en dessous de 5 % dans une gamme de longueurs d'onde comprise entre 280 nm et une longueur d'onde limite, située entre 325 nm et 350 nm et définie par un degré de réflexion (R) de 5 %, pour chaque angle d'incidence (α) compris entre 30° et 45° et que le degré (R) de réflexion d'une lumière (5) d'une longueur d'onde dans la gamme de longueurs d'onde comprise entre 355 nm et 390 nm, laquelle lumière est incidente à la surface arrière (6) avec un angle d'incidence (α), soit supérieur à 8 % pour chaque angle d'incidence (α) compris entre 30° et 45°,
e) délivrer les données qui représentent le revêtement (7a, 7b) et pour lesquelles les conditions, définies à l'étape d), pour le degré de réflexion (R) sont remplies.

13. Procédé selon la revendication 12, **caractérisé en ce que** le revêtement (7a, 7b) comprend une pluralité de couches diélectriques et **en ce que** les données représentant le revêtement (7a, 7b) comprennent les indices de réfraction et les épaisseurs des couches diélectriques.

14. Procédé de fabrication d'un verre de lunettes (1) sur la base des données délivrées à l'étape e) selon la revendication 12 ou 13.

15. Logiciel comportant un code de programme pour réaliser toutes les étapes de procédé selon l'une des revendications 12 à 14 lorsque le logiciel est chargé dans un ordinateur et/ou est exécuté dans un ordinateur.
